# EUROPEAN PATENT APPLICATION

(11) **EP 4 668 645 A1**
(43) Date of publication of application: **24.12.2025**
(21) Application number: 24756067.5
(22) Date of filing: 04.02.2024
(51) Int. Cl.: H04L 5/00

(54) **SIGNAL TRANSMISSION METHOD AND APPARATUS, AND STORAGE MEDIUM**

(30) Priority: 17.02.2023 CN 202310133201
(71) Applicant: Datang Mobile Communications Equipment Co., Ltd., Beijing 100085 (CN)
(72) Inventor: YANG, Meiying, Beijing 100085 (CN); WANG, Jiaqing, Beijing 100085 (CN); SU, Yuwan, Beijing 100085 (CN); LUO, Chen, Beijing 100085 (CN); CHENG, Fangchen, Beijing 100085 (CN)
(74) Representative: Studio Torta S.p.A.
(86) International application number: PCT/CN2024/075801
(87) International publication number: WO 2024/169693

(57) **Abstract**

Provided in the present disclosure are a signal transmission method and apparatus, and a storage medium. The method includes: at a first moment, acquiring configuration information of a plurality of sets of antenna ports and/or measurement configuration information of a plurality of sets of CSI, which information is sent by a network device; executing measurement of the plurality of sets of CSI of the plurality of sets of antenna ports, and determining the plurality of sets of CSI corresponding to the plurality of sets of antenna ports; and sending the plurality of sets of CSI to the network device.

## Description

### CROSS-REFERENCES TO RELATED APPLICATIONS

The present application claims priority to Chinese Patent Application No. 202310133201.8 filed on February 17, 2023, entitled "Signal Transmission Method and Apparatus, and Storage Medium", which is hereby incorporated by reference in its entirety.

### FIELD

The present application relates to the field of communications, and in particular to methods and apparatuses for signal transmission, and a storage medium.

### BACKGROUND

As commonly acknowledged, energy consumption is a main indicator of an operating expense (OPEX) of an operator. In new radio (NR) R18, a project of network energy-saving is established to mainly consider a standardization scheme of the network energy-saving. According to operator data, an operating expense of energy consumption in a mobile network accounts for about 23% of a total operating expense, and a vast majority of the energy consumption comes from a wireless access network, especially in an active antenna unit (AAU). At present, the energy consumption of a fifth generation mobile communication technology (5G) network is about 2-3 times of the energy consumption of a fourth generation mobile communication technology (4G) network. Therefore, the research on energy-saving technology for the energy consumption of 5G network is urgent.

Considering a trade-off between network energy-saving and a performance requirement of the network or terminal, a dynamic energy-saving information indication scheme may be adopted. In related discussions, a network energy-saving scheme includes a spatial domain energy-saving scheme and a power domain energy-saving scheme. In the spatial domain energy-saving scheme and power domain energy-saving scheme, an enhanced measurement based on a channel state information reference signal (CSI-RS) and an associated measurement report are the focus of R18 design. Adopting a scheme in the related art leads to a technical problem of high energy consumption in the network.

### BRIEF SUMMARY

Embodiments of the present application provide methods and apparatuses for signal transmission, and a storage medium to solve a technical problem of high energy consumption in the network in the related art.

An embodiment of the present application provides a method for signal transmission performed by a terminal, and the method includes:
obtaining multiple sets of antenna port configuration information and/or multiple sets of channel state information (CSI) measurement configuration information transmitted from a network device at a first moment;
measuring multiple sets of CSI for multiple sets of antenna ports based on the multiple sets of antenna port configuration information and/or the multiple sets of CSI measurement configuration information, and determining information of multiple sets of CSI corresponding to the multiple sets of antenna ports; and
transmitting the information of the multiple sets of CSI to the network device.

In some embodiments, obtaining the multiple sets of antenna port configuration information and/or the multiple sets of CSI measurement configuration information transmitted from the network device at the first moment includes:
obtaining simultaneously, at the first moment, the multiple sets of antenna port configuration information and/or the multiple sets of CSI measurement configuration information transmitted from the network device.

In some embodiments, obtaining the multiple sets of antenna port configuration information and/or the multiple sets of CSI measurement configuration information transmitted from the network device at the first moment includes:
obtaining separately, at different moments, one or more sets of antenna port configuration information and/or one or more sets of CSI measurement configuration information transmitted from the network device, where all multiple sets of antenna port configuration information and/or all multiple sets of CSI measurement configuration information corresponding to a CSI measurement are obtained at the first moment.

In some embodiments, obtaining the multiple sets of antenna port configuration information and/or the multiple sets of CSI measurement configuration information transmitted from the network device includes:
obtaining indication information, transmitted from the network device, for multiple sets of antenna ports needed to be measured and/or the multiple sets of CSI measurement configuration information; and
determining the multiple sets of antenna port configuration information and/or the multiple sets of CSI measurement configuration information based on the indication information.

In some embodiments, a configuration manner of the multiple sets of antenna port configuration information and/or the multiple sets of CSI measurement configuration information includes one or more of following manners:
one set of CSI measurement configuration information being configured with multiple sets of antenna port configuration information;
one set of CSI measurement configuration information being configured with one set of antenna port configuration information, where multiple sets of CSI measurement configuration information form a CSI measurement configuration information group, and multiple sets of antenna port configuration information in one CSI measurement configuration information group are associated; or
each beam management function being associated with one first set, where the first set includes at least one set of antenna port configuration information and/or at least one set of CSI measurement configuration information.

In some embodiments, the one set of CSI measurement configuration information being configured with the multiple sets of antenna port configuration information includes one or more of following configuration manners:
each set of CSI measurement configuration information being configured with report quality information for multiple sets of antenna ports;
each set of CSI measurement configuration information being configured with report configuration type information for multiple sets of antenna ports;
each set of CSI measurement configuration information being configured with a time domain parameter in report configuration type information for multiple sets of antenna ports;
each set of CSI measurement configuration information being configured with a frequency domain parameter in report configuration type information for multiple sets of antenna ports; or
each set of CSI measurement configuration information being configured with a codebook configuration parameter for multiple sets of antenna ports.

In some embodiments, the configuration manner, of each set of CSI measurement configuration information being configured with report quality information for multiple sets of antenna ports, includes one or more of following manners:
being configured with multiple sets of the report quality information, where each set of the report quality information corresponds to different antenna ports; or
being configured with one set of the report quality information including multiple sets of report quality parameters, where each set of report quality parameters corresponds to different antenna ports.

In some embodiments, an antenna port, corresponding to multiple sets of associated antenna port configuration information in one CSI measurement configuration information group, is a maximum antenna port configured by the network device or a set of antenna ports supporting adjustment.

In some embodiments, measuring the multiple sets of CSI for the multiple sets of antenna ports based on the multiple sets of antenna port configuration information and/or the multiple sets of CSI measurement configuration information, and determining the information of the multiple sets of CSI corresponding to the multiple sets of antenna ports includes:
in case that one set of CSI measurement configuration information is configured with multiple sets of antenna port configuration information, performing one or more CSI measurements based on one set of CSI measurement configuration information in the multiple sets of CSI measurement configuration information and multiple sets of antenna port configuration information corresponding to the one set of CSI measurement configuration information, and determining the information of the multiple sets of CSI corresponding to the multiple sets of antenna ports.

In some embodiments, measuring the multiple sets of CSI for the multiple sets of antenna ports based on the multiple sets of antenna port configuration information and/or the multiple sets of CSI measurement configuration information, and determining the information of the multiple sets of CSI corresponding to the multiple sets of antenna ports includes:
in case that one set of CSI measurement configuration information is configured with one set of antenna port configuration information, performing one or more CSI measurements based on one set of CSI measurement configuration information and one set of antenna port configuration information in each CSI measurement configuration information group, and determining the information of the multiple sets of CSI corresponding to the multiple sets of antenna ports.

In some embodiments, measuring the multiple sets of CSI for the multiple sets of antenna ports based on the multiple sets of antenna port configuration information and/or the multiple sets of CSI measurement configuration information, and determining the information of the multiple sets of CSI corresponding to the multiple sets of antenna ports includes:
in case that a configuration manner of the multiple sets of antenna port configuration information and/or the multiple sets of CSI measurement configuration information is that each beam management function is associated with one first set, performing one or more CSI measurements based on an associated first set, and determining the information of the multiple sets of CSI corresponding to the multiple sets of antenna ports.

In some embodiments, the multiple sets of antenna ports have a nested relationship on a same time unit; and/or
the multiple sets of antenna ports are orthogonal in at least one of a time resource, a frequency resource, or a code-domain resource.

In some embodiments, the method further includes:
obtaining a measurement reference signal transmitted from the network device.

In some embodiments, the information of the multiple sets of CSI is included in a first message.

An embodiment of the present application provides a method for signal transmission performed by a network device, and the method includes:
configuring multiple sets of antenna port configuration information and/or multiple sets of channel state information (CSI) measurement configuration information;
transmitting the multiple sets of antenna port configuration information and/or the multiple sets of CSI measurement configuration information to a terminal; and
obtaining information of multiple sets of CSI transmitted from the terminal.

In some embodiments, transmitting the multiple sets of antenna port configuration information and/or the CSI measurement configuration information to the terminal includes:
transmitting simultaneously, at a first moment, the multiple sets of antenna port configuration information and/or the multiple sets of CSI measurement configuration information to the terminal.

In some embodiments, transmitting the multiple sets of antenna port configuration information and/or the multiple sets of CSI measurement configuration information to the terminal includes:
transmitting respectively, at different moments, one or more sets of antenna port configuration information and/or one or more sets of CSI measurement configuration information to the terminal.

In some embodiments, transmitting the multiple sets of antenna port configuration information and/or the multiple sets of CSI measurement configuration information to the terminal includes:
transmitting indication information, to the terminal, for multiple sets of antenna ports needed to be measured and/or the multiple sets of CSI measurement configuration information, where the indication information is used to determine the multiple sets of antenna port configuration information and/or the multiple sets of CSI measurement configuration information.

In some embodiments, a configuration manner of the multiple sets of antenna port configuration information and/or the multiple sets of CSI measurement configuration information includes one or more of following manners:
one set of CSI measurement configuration information being configured with multiple sets of antenna port configuration information;
one set of CSI measurement configuration information being configured with one set of antenna port configuration information, where multiple sets of CSI measurement configuration information form a CSI measurement configuration information group, and multiple sets of antenna port configuration information in one CSI measurement configuration information group are associated; or
each beam management function being associated with one first set, where the first set includes at least one set of antenna port configuration information and/or at least one set of CSI measurement configuration information.

In some embodiments, the one set of CSI measurement configuration information being configured with the multiple sets of antenna port configuration information includes one or more of following configuration manners:
each set of CSI measurement configuration information being configured with report quality information for multiple sets of antenna ports;
each set of CSI measurement configuration information being configured with report configuration type information for multiple sets of antenna ports;
each set of CSI measurement configuration information being configured with a time domain parameter in report configuration type information for multiple sets of antenna ports;
each set of CSI measurement configuration information being configured with a frequency domain parameter in report configuration type information for multiple sets of antenna ports; or
each set of CSI measurement configuration information being configured with a codebook configuration parameter for multiple sets of antenna ports.

In some embodiments, the configuration manner, of each set of CSI measurement configuration information being configured with report quality information for multiple sets of antenna ports, includes one or more of following manners:
being configured with multiple sets of the report quality information, where each set of the report quality information corresponds to different antenna ports; or
being configured with one set of the report quality information including multiple sets of report quality parameters, where each set of report quality parameters corresponds to different antenna ports.

In some embodiments, an antenna port, corresponding to multiple sets of associated antenna port configuration information in one CSI measurement configuration information group, is a maximum antenna port configured by the network device or a set of antenna ports supporting adjustment.

In some embodiments, multiple sets of antenna ports have a nested relationship on a same time unit; and/or
the multiple sets of antenna ports are orthogonal in at least one of a time resource, a frequency resource, or a code-domain resource.

In some embodiments, the method further includes:
transmitting a measurement reference signal to the terminal.

In some embodiments, obtaining the information of the multiple sets of CSI transmitted from the terminal includes:
obtaining a first message transmitted from the terminal, where the first message includes the information of the multiple sets of CSI.

An embodiment of the present application provides a terminal, including: a memory, a transceiver, and a processor;
the memory is used for storing a computer program; the transceiver is used for receiving and transmitting data under control of the processor; and the processor is used for reading the computer program in the memory and performing following operations:
obtaining multiple sets of antenna port configuration information and/or multiple sets of channel state information (CSI) measurement configuration information transmitted from a network device at a first moment;
measuring multiple sets of CSI for multiple sets of antenna ports based on the multiple sets of antenna port configuration information and/or the multiple sets of CSI measurement configuration information, and determining information of multiple sets of CSI corresponding to the multiple sets of antenna ports; and
transmitting the information of the multiple sets of CSI to the network device.

In some embodiments, obtaining the multiple sets of antenna port configuration information and/or the multiple sets of CSI measurement configuration information transmitted from the network device at the first moment includes:
obtaining simultaneously, at the first moment, the multiple sets of antenna port configuration information and/or the multiple sets of CSI measurement configuration information transmitted from the network device.

In some embodiments, obtaining the multiple sets of antenna port configuration information and/or the multiple sets of CSI measurement configuration information transmitted from the network device at the first moment includes:
obtaining separately, at different moments, one or more sets of antenna port configuration information and/or one or more sets of CSI measurement configuration information transmitted from the network device, where all multiple sets of antenna port configuration information and/or all multiple sets of CSI measurement configuration information corresponding to a CSI measurement are obtained at the first moment.

In some embodiments, obtaining the multiple sets of antenna port configuration information and/or the multiple sets of CSI measurement configuration information transmitted from the network device includes:
obtaining indication information, transmitted from the network device, for multiple sets of antenna ports needed to be measured and/or the multiple sets of CSI measurement configuration information; and
determining the multiple sets of antenna port configuration information and/or the multiple sets of CSI measurement configuration information based on the indication information.

In some embodiments, a configuration manner of the multiple sets of antenna port configuration information and/or the multiple sets of CSI measurement configuration information includes one or more of following manners:
one set of CSI measurement configuration information being configured with multiple sets of antenna port configuration information;
one set of CSI measurement configuration information being configured with one set of antenna port configuration information, where multiple sets of CSI measurement configuration information form a CSI measurement configuration information group, and multiple sets of antenna port configuration information in one CSI measurement configuration information group are associated; or
each beam management function being associated with one first set, where the first set includes at least one set of antenna port configuration information and/or at least one set of CSI measurement configuration information.

In some embodiments, the one set of CSI measurement configuration information being configured with the multiple sets of antenna port configuration information includes one or more of following configuration manners:
each set of CSI measurement configuration information being configured with report quality information for multiple sets of antenna ports;
each set of CSI measurement configuration information being configured with report configuration type information for multiple sets of antenna ports;
each set of CSI measurement configuration information being configured with a time domain parameter in report configuration type information for multiple sets of antenna ports;
each set of CSI measurement configuration information being configured with a frequency domain parameter in report configuration type information for multiple sets of antenna ports; or
each set of CSI measurement configuration information being configured with a codebook configuration parameter for multiple sets of antenna ports.

In some embodiments, the configuration manner, of each set of CSI measurement configuration information being configured with report quality information for multiple sets of antenna ports, includes one or more of following manners:
being configured with multiple sets of the report quality information, where each set of the report quality information corresponds to different antenna ports; or
being configured with one set of the report quality information including multiple sets of report quality parameters, where each set of report quality parameters corresponds to different antenna ports.

In some embodiments, an antenna port, corresponding to multiple sets of associated antenna port configuration information in one CSI measurement configuration information group, is a maximum antenna port configured by the network device or a set of antenna ports supporting adjustment.

In some embodiments, measuring the multiple sets of CSI for the multiple sets of antenna ports based on the multiple sets of antenna port configuration information and/or the multiple sets of CSI measurement configuration information, and determining the information of the multiple sets of CSI corresponding to the multiple sets of antenna ports includes:
in case that one set of CSI measurement configuration information is configured with multiple sets of antenna port configuration information, performing one or more CSI measurements based on one set of CSI measurement configuration information in the multiple sets of CSI measurement configuration information and multiple sets of antenna port configuration information corresponding to the one set of CSI measurement configuration information, and determining the information of the multiple sets of CSI corresponding to the multiple sets of antenna ports.

In some embodiments, measuring the multiple sets of CSI for the multiple sets of antenna ports based on the multiple sets of antenna port configuration information and/or the multiple sets of CSI measurement configuration information, and determining the information of the multiple sets of CSI corresponding to the multiple sets of antenna ports includes:
in case that one set of CSI measurement configuration information is configured with one set of antenna port configuration information, performing one or more CSI measurements based on one set of CSI measurement configuration information and one set of antenna port configuration information in each CSI measurement configuration information group, and determining the information of the multiple sets of CSI corresponding to the multiple sets of antenna ports.

In some embodiments, measuring the multiple sets of CSI for the multiple sets of antenna ports based on the multiple sets of antenna port configuration information and/or the multiple sets of CSI measurement configuration information, and determining the information of the multiple sets of CSI corresponding to the multiple sets of antenna ports includes:
in case that a configuration manner of the multiple sets of antenna port configuration information and/or the multiple sets of CSI measurement configuration information is that each beam management function is associated with one first set, performing one or more CSI measurements based on an associated first set, and determining the information of the multiple sets of CSI corresponding to the multiple sets of antenna ports.

In some embodiments, the multiple sets of antenna ports have a nested relationship on a same time unit; and/or
the multiple sets of antenna ports are orthogonal in at least one of a time resource, a frequency resource, or a code-domain resource.

In some embodiments, the processor is further used for reading the computer program in the memory and performing following operations:
obtaining a measurement reference signal transmitted from the network device.

In some embodiments, the information of the multiple sets of CSI is included in a first message.

An embodiment of the present application provides a network side device, including: a memory, a transceiver, and a processor;
the memory is used for storing a computer program; the transceiver is used for receiving and transmitting data under control of the processor; and the processor is used for reading the computer program in the memory and performing the following operations:
configuring multiple sets of antenna port configuration information and/or multiple sets of channel state information (CSI) measurement configuration information;
transmitting the multiple sets of antenna port configuration information and/or the multiple sets of CSI measurement configuration information to a terminal; and
obtaining information of multiple sets of CSI transmitted from the terminal.

In some embodiments, transmitting the multiple sets of antenna port configuration information and/or the CSI measurement configuration information to the terminal includes:
transmitting simultaneously, at a first moment, the multiple sets of antenna port configuration information and/or the multiple sets of CSI measurement configuration information to the terminal.

In some embodiments, transmitting the multiple sets of antenna port configuration information and/or the multiple sets of CSI measurement configuration information to the terminal includes:
transmitting respectively, at different moments, one or more sets of antenna port configuration information and/or one or more sets of CSI measurement configuration information to the terminal.

In some embodiments, transmitting the multiple sets of antenna port configuration information and/or the multiple sets of CSI measurement configuration information to the terminal includes:
transmitting indication information, to the terminal, for multiple sets of antenna ports needed to be measured and/or the multiple sets of CSI measurement configuration information, where the indication information is used to determine the multiple sets of antenna port configuration information and/or the multiple sets of CSI measurement configuration information.

In some embodiments, a configuration manner of the multiple sets of antenna port configuration information and/or the multiple sets of CSI measurement configuration information includes one or more of following manners:
one set of CSI measurement configuration information being configured with multiple sets of antenna port configuration information;
one set of CSI measurement configuration information being configured with one set of antenna port configuration information, where multiple sets of CSI measurement configuration information form a CSI measurement configuration information group, and multiple sets of antenna port configuration information in one CSI measurement configuration information group are associated; or
each beam management function being associated with one first set, where the first set includes at least one set of antenna port configuration information and/or at least one set of CSI measurement configuration information.

In some embodiments, the one set of CSI measurement configuration information being configured with the multiple sets of antenna port configuration information includes one or more of following configuration manners:
each set of CSI measurement configuration information being configured with report quality information for multiple sets of antenna ports;
each set of CSI measurement configuration information being configured with report configuration type information for multiple sets of antenna ports;
each set of CSI measurement configuration information being configured with a time domain parameter in report configuration type information for multiple sets of antenna ports;
each set of CSI measurement configuration information being configured with a frequency domain parameter in report configuration type information for multiple sets of antenna ports; or
each set of CSI measurement configuration information being configured with a codebook configuration parameter for multiple sets of antenna ports.

In some embodiments, the configuration manner, of each set of CSI measurement configuration information being configured with report quality information for multiple sets of antenna ports, includes one or more of following manners:
being configured with multiple sets of the report quality information, where each set of the report quality information corresponds to different antenna ports; or
being configured with one set of the report quality information including multiple sets of report quality parameters, where each set of report quality parameters corresponds to different antenna ports.

In some embodiments, an antenna port, corresponding to multiple sets of associated antenna port configuration information in one CSI measurement configuration information group, is a maximum antenna port configured by the network device or a set of antenna ports supporting adjustment.

In some embodiments, the multiple sets of antenna ports have a nested relationship on a same time unit; and/or
the multiple sets of antenna ports are orthogonal in at least one of a time resource, a frequency resource, or a code-domain resource.

In some embodiments, the processor is further used for reading the computer program in the memory and performing following operations:
transmitting a measurement reference signal to the terminal.

In some embodiments, obtaining the information of the multiple sets of CSI transmitted from the terminal includes:
obtaining a first message transmitted from the terminal, where the first message includes the information of the multiple sets of CSI.

An embodiment of the present application provides an apparatus for signal transmission and the apparatus includes:
a first obtaining module, used for obtaining multiple sets of antenna port configuration information and/or multiple sets of channel state information (CSI) measurement configuration information transmitted from a network device at a first moment;
a first determining module, used for measuring multiple sets of CSI for multiple sets of antenna ports based on the multiple sets of antenna port configuration information and/or the multiple sets of CSI measurement configuration information, and determining information of multiple sets of CSI corresponding to the multiple sets of antenna ports; and
a first transmitting module, used for transmitting the information of the multiple sets of CSI to the network device.

In some embodiments, obtaining the multiple sets of antenna port configuration information and/or the multiple sets of CSI measurement configuration information transmitted from the network device at the first moment includes:
obtaining simultaneously, at the first moment, the multiple sets of antenna port configuration information and/or the multiple sets of CSI measurement configuration information transmitted from the network device.

In some embodiments, obtaining the multiple sets of antenna port configuration information and/or the multiple sets of CSI measurement configuration information transmitted from the network device at the first moment includes:
obtaining separately, at different moments, one or more sets of antenna port configuration information and/or one or more sets of CSI measurement configuration information transmitted from the network device, where all multiple sets of antenna port configuration information and/or all multiple sets of CSI measurement configuration information corresponding to a CSI measurement are obtained at the first moment.

In some embodiments, obtaining the multiple sets of antenna port configuration information and/or the multiple sets of CSI measurement configuration information transmitted from the network device includes:
obtaining indication information, transmitted from the network device, for multiple sets of antenna ports needed to be measured and/or the multiple sets of CSI measurement configuration information; and
determining the multiple sets of antenna port configuration information and/or the multiple sets of CSI measurement configuration information based on the indication information.

In some embodiments, a configuration manner of the multiple sets of antenna port configuration information and/or the multiple sets of CSI measurement configuration information includes one or more of following manners:
one set of CSI measurement configuration information being configured with multiple sets of antenna port configuration information;
one set of CSI measurement configuration information being configured with one set of antenna port configuration information, where multiple sets of CSI measurement configuration information form a CSI measurement configuration information group, and multiple sets of antenna port configuration information in one CSI measurement configuration information group are associated; or
each beam management function being associated with one first set, where the first set includes at least one set of antenna port configuration information and/or at least one set of CSI measurement configuration information.

In some embodiments, the one set of CSI measurement configuration information being configured with the multiple sets of antenna port configuration information includes one or more of following configuration manners:
each set of CSI measurement configuration information being configured with report quality information for multiple sets of antenna ports;
each set of CSI measurement configuration information being configured with report configuration type information for multiple sets of antenna ports;
each set of CSI measurement configuration information being configured with a time domain parameter in report configuration type information for multiple sets of antenna ports;
each set of CSI measurement configuration information being configured with a frequency domain parameter in report configuration type information for multiple sets of antenna ports; or
each set of CSI measurement configuration information being configured with a codebook configuration parameter for multiple sets of antenna ports.

In some embodiments, the configuration manner, of each set of CSI measurement configuration information being configured with report quality information for multiple sets of antenna ports, includes one or more of following manners:
being configured with multiple sets of the report quality information, where each set of the report quality information corresponds to different antenna ports; or
being configured with one set of the report quality information including multiple sets of report quality parameters, where each set of report quality parameters corresponds to different antenna ports.

In some embodiments, an antenna port, corresponding to multiple sets of associated antenna port configuration information in one CSI measurement configuration information group, is a maximum antenna port configured by the network device or a set of antenna ports supporting adjustment.

In some embodiments, measuring the multiple sets of CSI for the multiple sets of antenna ports based on the multiple sets of antenna port configuration information and/or the multiple sets of CSI measurement configuration information, and determining the information of the multiple sets of CSI corresponding to the multiple sets of antenna ports includes:
in case that one set of CSI measurement configuration information is configured with multiple sets of antenna port configuration information, performing one or more CSI measurements based on one set of CSI measurement configuration information in the multiple sets of CSI measurement configuration information and multiple sets of antenna port configuration information corresponding to the one set of CSI measurement configuration information, and determining the information of the multiple sets of CSI corresponding to the multiple sets of antenna ports.

In some embodiments, measuring the multiple sets of CSI for the multiple sets of antenna ports based on the multiple sets of antenna port configuration information and/or the multiple sets of CSI measurement configuration information, and determining information of the multiple sets of CSI corresponding to the multiple sets of antenna ports includes:
in case that one set of CSI measurement configuration information is configured with one set of antenna port configuration information, performing one or more CSI measurements based on one set of CSI measurement configuration information and one set of antenna port configuration information in each CSI measurement configuration information group, and determining the information of the multiple sets of CSI corresponding to the multiple sets of antenna ports.

In some embodiments, measuring the multiple sets of CSI for the multiple sets of antenna ports based on the multiple sets of antenna port configuration information and/or the multiple sets of CSI measurement configuration information, and determining the information of the multiple sets of CSI corresponding to the multiple sets of antenna ports includes:
in case that a configuration manner of the multiple sets of antenna port configuration information and/or the multiple sets of CSI measurement configuration information is that each beam management function is associated with one first set, performing one or more CSI measurements based on an associated first set, and determining the information of the multiple sets of CSI corresponding to the multiple sets of antenna ports.

In some embodiments, the multiple sets of antenna ports have a nested relationship on a same time unit; and/or
the multiple sets of antenna ports are orthogonal in at least one of a time resource, a frequency resource, or a code-domain resource.

In some embodiments, the apparatus further includes:
a third obtaining module, used for obtaining a measurement reference signal transmitted from the network device.

In some embodiments, the information of the multiple sets of CSI is included in a first message.

An embodiment of the present application provides an apparatus for signal transmission and the apparatus includes:
a first configuring module, used for configuring multiple sets of antenna port configuration information and/or multiple sets of channel state information (CSI) measurement configuration information;
a second transmitting module, used for transmitting the multiple sets of antenna port configuration information and/or the multiple sets of CSI measurement configuration information to a terminal; and
a second obtaining module, used for obtaining information of multiple sets of CSI transmitted from the terminal.

In some embodiments, transmitting the multiple sets of antenna port configuration information and/or the CSI measurement configuration information to the terminal includes:
transmitting simultaneously, at a first moment, the multiple sets of antenna port configuration information and/or the multiple sets of CSI measurement configuration information to the terminal.

In some embodiments, transmitting the multiple sets of antenna port configuration information and/or the multiple sets of CSI measurement configuration information to the terminal includes:
transmitting respectively, at different moments, one or more sets of antenna port configuration information and/or one or more sets of CSI measurement configuration information to the terminal.

In some embodiments, transmitting the multiple sets of antenna port configuration information and/or the multiple sets of CSI measurement configuration information to the terminal includes:
transmitting indication information, to the terminal, for multiple sets of antenna ports needed to be measured and/or the multiple sets of CSI measurement configuration information, where the indication information is used to determine the multiple sets of antenna port configuration information and/or the multiple sets of CSI measurement configuration information.

In some embodiments, a configuration manner of the multiple sets of antenna port configuration information and/or the multiple sets of CSI measurement configuration information includes one or more of following manners:
one set of CSI measurement configuration information being configured with multiple sets of antenna port configuration information;
one set of CSI measurement configuration information being configured with one set of antenna port configuration information, where multiple sets of CSI measurement configuration information form a CSI measurement configuration information group, and multiple sets of antenna port configuration information in one CSI measurement configuration information group are associated; or
each beam management function being associated with one first set, where the first set includes at least one set of antenna port configuration information and/or at least one set of CSI measurement configuration information.

In some embodiments, the one set of CSI measurement configuration information being configured with the multiple sets of antenna port configuration information includes one or more of following configuration manners:
each set of CSI measurement configuration information being configured with report quality information for multiple sets of antenna ports;
each set of CSI measurement configuration information being configured with report configuration type information for multiple sets of antenna ports;
each set of CSI measurement configuration information being configured with a time domain parameter in report configuration type information for multiple sets of antenna ports;
each set of CSI measurement configuration information being configured with a frequency domain parameter in report configuration type information for multiple sets of antenna ports; or
each set of CSI measurement configuration information being configured with a codebook configuration parameter for multiple sets of antenna ports.

In some embodiments, the configuration manner, of each set of CSI measurement configuration information being configured with report quality information for multiple sets of antenna ports, includes one or more of following manners:
being configured with multiple sets of the report quality information, where each set of the report quality information corresponds to different antenna ports; or
being configured with one set of the report quality information including multiple sets of report quality parameters, where each set of report quality parameters corresponds to different antenna ports.

In some embodiments, an antenna port, corresponding to multiple sets of associated antenna port configuration information in one CSI measurement configuration information group, is a maximum antenna port configured by the network device or a set of antenna ports supporting adjustment.

In some embodiments, the multiple sets of antenna ports have a nested relationship on a same time unit; and/or
the multiple sets of antenna ports are orthogonal in at least one of a time resource, a frequency resource, or a code-domain resource.

In some embodiments, the apparatus further includes:
a third transmitting module, used for transmitting a measurement reference signal to the terminal.

In some embodiments, obtaining the information of the multiple sets of CSI transmitted from the terminal includes:
obtaining a first message transmitted from the terminal, where the first message includes the information of the multiple sets of CSI.

An embodiment of the present application provides a processor-readable storage medium storing a computer program, and the computer program is used for causing a processor to perform any of the method for signal transmission provided by the above embodiments of the present application.

An embodiment of the present application provides a computer-readable storage medium storing a computer program, and the computer program is used for causing a computer to perform any of the method for signal transmission provided by the above embodiments of the present application.

An embodiment of the present application provides a communication device-readable storage medium storing a computer program, and the computer program is used for causing a communication device to perform any of the method for signal transmission provided by the above embodiments of the present application.

An embodiment of the present application provides a chip product-readable storage medium storing a computer program, and the computer program is used for causing a chip product to perform any of the method for signal transmission provided by the above embodiments of the present application.

According to the methods and apparatuses for signal transmission, and a storage medium provided by the embodiments of the present application, by carrying the multiple sets of antenna port information in one piece of CSI measurement configuration information or configuring the multiple associated CSI measurement configuration information, the UE obtains the multiple sets of the CSI information for the multiple sets of antenna ports through the multiple measurements. Not only the resource overhead for the relevant CSI configuration, the measurement, and/or the report is reduced, more accurate link quality information is provided to the base station, the network performance is improved and the network energy consumption is reduced.

### BRIEF DESCRIPTION OF THE DRAWINGS

To clearly illustrate the solutions in the embodiments of the present application, the drawings used in the description of the embodiments are briefly described below. The drawings in following description are only some embodiments of the present application, and other drawings may be obtained according to these drawings without any creative effort for those skilled in the art.
FIG. 1 is a first schematic flowchart of a method for signal transmission according to an embodiment of the present application;
Fig. 2 is a diagram of configuration for channel state information-reference signal (CSI-RS) according to an embodiment of the present application;
FIG. 3 is a first diagram of channel state information (CSI) information configuration of antenna port for report configuration information according to an embodiment of the present application;
FIG. 4 is a second diagram of channel state information (CSI) information configuration of antenna port for report configuration information according to an embodiment of the present application.
FIG. 5 is a third diagram of channel state information (CSI) information configuration of antenna port for report configuration information according to an embodiment of the present application;
FIG. 6 is a fourth diagram of channel state information (CSI) information configuration of antenna port for report configuration information according to an embodiment of the present application;
FIG. 7 is a fifth diagram of channel state information (CSI) information configuration of antenna port for report configuration information according to an embodiment of the present application;
FIG. 8 is a second schematic flowchart of a method for signal transmission according to an embodiment of the present application;
FIG. 9 is a schematic structural diagram of a terminal according to an embodiment of the present application;
FIG. 10 is a schematic structural diagram of a network device according to an embodiment of the present application;
FIG. 11 is a first schematic structural diagram of an apparatus for signal transmission according to an embodiment of the present application; and
FIG. 12 is a second schematic structural diagram of an apparatus for signal transmission according to an embodiment of the present application.

### DETAILED DESCRIPTION

Considering a trade-off between network energy-saving and a performance requirement of a network or a terminal, a dynamic energy-saving information indication scheme may be adopted. A network energy-saving scheme includes a spatial domain energy-saving scheme and a power domain energy-saving scheme. In the spatial domain energy-saving scheme and power domain energy-saving scheme, an enhanced measurement based on a channel state information reference signal (CSI-RS) and an associated measurement report are the focus of R18 design. Adopting a scheme in a related technology leads to a technical problem of high energy consumption in the network. How to design multiple CSI-RS measurements and how to design multiple CSI-RS reports need further research and design.

For an energy-saving technology of the base station, in case of adjusting a spatial domain configuration, such as adjusting an antenna port of the base station, how to perform a measurement and/or a report of channel state indication (CSI) information for an antenna adjustment of the base station is not discussed, and there is also no further solution.

In case of considering to configure multiple pieces of CSI report configuration information (CSI-reportConfig), different CSI report configuration information corresponds to different antenna port numbers. It may also work, but following problem is existed: a number of CSI reports supported by a terminal capability is limited. For example, current CSI report configuration information includes four P/SP/A-CSI report configuration information for each bandwidth part (BWP), and each component carrier (CC) may report up to 8 at a same time; or, a number of all antenna ports that may be supported on each band for CSI resource configuration information is 256. This implementation reduces flexibility of a CSI report, because some configurations of the CSI report is occupied by a dynamic antenna port adjustment. Besides, a large amount of CSI redundant information also exists.

Embodiments of the present application provides methods for measurement and/or report of CSI information for an antenna adjustment of the base station based on above analysis and research.

To make the objectives, solutions, and advantages of the embodiments of the present application clearer, the solutions in the embodiments of the present application are clearly and completely described in the following with reference to the accompanying drawings in the embodiments of the present application. These embodiments are only a part of the embodiments of the present application, and not all of the embodiments. All other embodiments obtained by those skilled in the art based on the embodiments of the present application without any creative effort belong to the scope of the present application.

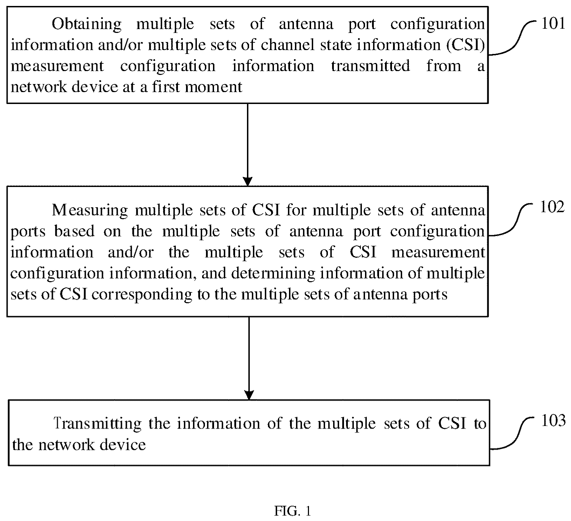

FIG. 1 is a first schematic flowchart of a method for signal transmission according to an embodiment of the present application. As shown in FIG. 1, an embodiment of the present application provides a method for signal transmission, and an execution subject of the method is a terminal, such as a mobile phone, etc. The method includes following steps.

Step 101: obtaining multiple sets of antenna port configuration information and/or multiple sets of channel state information (CSI) measurement configuration information transmitted from a network device at a first moment.

In an embodiment, the terminal obtains the multiple sets of antenna port configuration information and/or the multiple sets of CSI measurement configuration information transmitted from the network device at the first moment, and the network device transmits the multiple sets of antenna port configuration information and/or the multiple sets of CSI measurement configuration information to the terminal. The multiple sets of antenna port configuration information and/or the multiple sets of CSI measurement configuration information, transmitted from the network device to the terminal, are respectively transmitted at different moments before the first moment, or simultaneously transmitted at the first moment.

The terminal obtains the multiple sets of antenna port configuration information and/or the multiple sets of CSI measurement configuration information at the first moment. The network device configures multiple sets of antenna port information and/or CSI measurement information via radio resource control (RRC) and dynamically indicates or activates antenna port information and/or CSI measurement information to be measured and/or reported via downlink control information (DCI); or, the network device indicates the multiple sets of the antenna port information and/or the CSI measurement information via a dynamic signaling, such as DCI, and media access control-control element (MAC-CE), etc.

The antenna port configuration information is equivalent to configuration information of an antenna port, and the CSI measurement configuration information is equivalent to configuration information of a CSI measurement.

Step 102: measuring multiple sets of CSI for multiple sets of antenna ports based on the multiple sets of antenna port configuration information and/or the multiple sets of CSI measurement configuration information, and determining information of multiple sets of CSI corresponding to the multiple sets of antenna ports.

In an embodiment, the network device transmits a reference signal for the CSI measurement to the terminal. The terminal receives the reference signal for the CSI measurement transmitted from the network device, performs measurements on the multiple sets of CSI for the multiple sets of antenna ports on the reference signal based on the multiple sets of antenna port configuration information and/or the multiple sets of CSI measurement configuration information, and obtains the information of the multiple sets of CSI corresponding to the multiple sets of antenna ports.

Taking the reference signal, transmitted from the network device and received by the terminal, as a first channel state information-reference signal (CSI-RS) resource as an example, the first CSI-RS resource includes a first set of antenna port configuration information and a second set of antenna port configuration information, where the first set of antenna port configuration information may be a current maximum antenna port information of the base station and the second set of antenna port configuration information may be other antenna port information except a maximum antenna port information.

The terminal performs one or more CSI measurements based on the received first set of antenna port configuration information and the second set of antenna port configuration information to be measured and reported, and obtains CSI information of the first set of antenna ports and CSI information of the second set of antenna ports.

For example, the terminal performs one CSI measurement based on received multiple sets of antenna port configuration information to be measured and reported, and obtains the information of the multiple sets of CSI.

For another example, the terminal performs multiple CSI measurements based on the received multiple sets of antenna port configuration information to be measured and reported, and obtains the information of the multiple sets of CSI.

Step 103: transmitting the information of the multiple sets of CSI to the network device.

In an embodiment, the terminal transmits the information of the multiple sets of CSI to the network device via a first message at a second moment, and the network device receives the information of the multiple sets of CSI via the first message at a third moment.

The second moment is an absolute time or a relative time of a starting point, or the second moment is a second time window of the starting point. The first message includes information transmitted by the multiple sets of CSI, and the first message includes a physical uplink control channel (PUCCH) or a physical uplink shared channel (PUSCH). The third moment is an absolute time or a relative time of a starting point, or the third moment is a third time window of the starting point.

According to the method for signal transmission provided by the embodiments of the present application, by carrying the multiple sets of antenna port information in one piece of CSI measurement configuration information or configuring multiple associated CSI measurement configuration information, a user equipment (UE) obtains the multiple sets of the CSI information for the multiple sets of antenna ports through multiple measurements. Not only the resource overhead for a CSI configuration, a measurement, and/or a report is reduced, more accurate link quality information is provided to the base station, the network performance is improved and the network energy consumption is reduced.

In some embodiments, obtaining the multiple sets of antenna port configuration information and/or the multiple sets of CSI measurement configuration information transmitted from the network device at the first moment includes:
obtaining simultaneously, at the first moment, the multiple sets of antenna port configuration information and/or the multiple sets of CSI measurement configuration information transmitted from the network device.

In an embodiment, the network device may transmit the multiple sets of antenna port configuration information and/or the multiple sets of CSI measurement configuration information to the terminal at the same moment. The terminal may simultaneously receive, at the first moment, the multiple sets of antenna port configuration information and/or the multiple sets of CSI measurement configuration information transmitted from the network device. After the first moment, the terminal may perform measurements for multiple sets of the CSI s for the multiple sets of antenna ports, obtain the multiple sets of CSI information corresponding to the multiple sets of antenna ports, and transmit the multiple sets of CSI information via the first message at the second moment.

According to the method for signal transmission provided by the embodiments of the present application, by carrying the multiple sets of antenna port information in one piece of CSI measurement configuration information or configuring the multiple associated CSI measurement configuration information, the UE obtains the multiple sets of the CSI information for the multiple sets of antenna ports through the multiple measurements. Not only the resource overhead for the relevant CSI configuration, the measurement, and/or the report is reduced, more accurate link quality information is provided to the base station, the network performance is improved and the network energy consumption is reduced.

In some embodiments, obtaining the multiple sets of antenna port configuration information and/or the multiple sets of CSI measurement configuration information transmitted from the network device at the first moment includes:
obtaining separately, at different moments, one or more sets of antenna port configuration information and/or one or more sets of CSI measurement configuration information transmitted from the network device, where all multiple sets of antenna port configuration information and/or all multiple sets of CSI measurement configuration information corresponding to a CSI measurement are obtained at the first moment.

In an embodiment, the network device may transmit respectively, at different moments, one or more sets of antenna port configuration information and/or one or more sets of CSI measurement configuration information to the terminal. The terminal may respectively obtain, at different moments, one or more sets of antenna port configuration information and/or one or more sets of CSI measurement configuration information transmitted from the network device. However, in case of performing the CSI measurement, all multiple sets of antenna port configuration information and/or all multiple sets of CSI measurement configuration information corresponding to the CSI measurement need to be obtained at the first moment, where the first moment is not later than a time of the CSI measurement.

After the first moment, the terminal may perform the measurement for multiple sets of the CSI for the multiple sets of antenna ports, obtain the multiple sets of CSI information corresponding to the multiple sets of antenna ports, and transmit the multiple sets of CSI information via the first message at the second moment.

According to the method for signal transmission provided by the embodiments of the present application, by carrying the multiple sets of antenna port information in one piece of CSI measurement configuration information or configuring the multiple associated CSI measurement configuration information, the UE obtains the multiple sets of the CSI information for the multiple sets of antenna ports through the multiple measurements. Not only the resource overhead for the relevant CSI configuration, the measurement, and/or the report is reduced, more accurate link quality information is provided to the base station, the network performance is improved and the network energy consumption is reduced.

In some embodiments, obtaining the multiple sets of antenna port configuration information and/or the multiple sets of CSI measurement configuration information transmitted from the network device includes:
obtaining indication information, transmitted from the network device, of multiple sets of antenna ports needed to be measured and/or the multiple sets of CSI measurement configuration information; and
determining the multiple sets of antenna port configuration information and/or the multiple sets of CSI measurement configuration information based on the indication information.

In an embodiment, the terminal obtains the multiple sets of antenna port configuration information and/or the multiple sets of CSI measurement configuration information transmitted from the network device at the first moment, and the network device transmits the multiple sets of antenna port configuration information and/or the multiple sets of CSI measurement configuration information to the terminal. The multiple sets of antenna port configuration information and/or the multiple sets of CSI measurement configuration information, transmitted from the network device to the terminal, are respectively transmitted at different moments before the first moment, or simultaneously transmitted at the first moment.

The terminal obtains the multiple sets of antenna port configuration information and/or the multiple sets of CSI measurement configuration information at the first moment. The network device configures the multiple sets of antenna port information and/or the CSI measurement information via radio resource control (RRC) and dynamically indicates or activates the antenna port information and/or the CSI measurement information to be measured and/or reported via the downlink control information (DCI); or, the network device indicates the multiple sets of the antenna port information and/or the CSI measurement information via the dynamic signaling, such as DCI, and media access control-control element (MAC-CE), etc.

According to the method for signal transmission provided by the embodiments of the present application, by configuring an indication method for the multiple sets of antenna port configuration information and/or the multiple sets of CSI measurement configuration information to be measured, the UE obtains the multiple sets of the CSI information for the multiple sets of antenna ports through the multiple measurements. Not only the resource overhead for the relevant CSI configuration, the measurement, and/or the report is reduced, more accurate link quality information is provided to the base station, the network performance is improved and the network energy consumption is reduced.

In some embodiments, a configuration manner of the multiple sets of antenna port configuration information and/or the multiple sets of CSI measurement configuration information includes one or more of following manners:
one set of CSI measurement configuration information being configured with multiple sets of antenna port configuration information;
one set of CSI measurement configuration information being configured with one set of antenna port configuration information, where multiple sets of CSI measurement configuration information form a CSI measurement configuration information group, and multiple sets of antenna port configuration information in one CSI measurement configuration information group are associated; or
each beam management function being associated with one first set, where the first set includes at least one set of antenna port configuration information and/or at least one set of CSI measurement configuration information.

In an embodiment, the configuration manner of the multiple sets of antenna port configuration information and/or the multiple sets of CSI measurement configuration information may be that one set of CSI measurement configuration information is configured with the multiple sets of antenna port configuration information. The terminal may perform the measurement for multiple sets of the CSI for the multiple sets of antenna ports based on the obtained multiple sets of antenna port configuration information and/or the CSI measurement configuration information, obtain the information including multiple sets of CSI corresponding to the multiple sets of antenna ports, and transmit CSI via the first message at the second moment.

In an embodiment, the configuration manner of the multiple sets of antenna port configuration information and/or the multiple sets of CSI measurement configuration information may be that one set of CSI measurement configuration information is configured with the one set of antenna port configuration information, the multiple sets of CSI measurement configuration information form the CSI measurement configuration information group, and the multiple sets of antenna port configuration information in one CSI measurement configuration information group are associated. The CSI measurement configuration information group may indicate the multiple sets of CSI information for the multiple sets of antenna ports to be obtained at the second moment. The terminal performs the CSI measurements based on the obtained multiple sets of antenna port information and/or the CSI measurement configuration information, obtains the information of the multiple sets of CSI corresponding to the multiple sets of antenna ports, and transmits CSI via the first message at the second moment.

In an embodiment, the configuration manner of the multiple sets of antenna port configuration information and/or the multiple sets of CSI measurement configuration information may further be that each beam management function is associated with one first set, where the first set includes at least one set of the antenna port configuration information and/or at least one set of the CSI measurement configuration information. The first set may indicate the multiple sets of CSI information for the multiple sets of antenna ports to be obtained at the second moment. The terminal performs the CSI measurements based on the obtained multiple sets of antenna port information and/or the CSI measurement configuration information, obtains the information of the multiple sets of CSI corresponding to the multiple sets of antenna ports, and transmits CSI via the first message at the second moment.

For example, the first set may be a transceiver unit (TXRU) set, and each beam management function is associated with one TXRU set. In case that multiple beam management functions are performed, the terminal performs the CSI measurements based on associated TXRU sets, where the CSI measurements includes at least an L1-signal interference noise ratio (L1-SINR) measurement and an L1-reference signal received power (L1-RSRP) measurement.

For another example, the first set may be the TXRU set, and each beam management function is associated with one TXRU set. In case that multiple beam management functions are performed, the terminal performs multiple CSI measurements based on one associated TXRU set, and obtains multiple CSI information.

The multiple sets of antenna ports may have a nested relationship within the same time unit, or be orthogonal in at least one of a time resource, a frequency resource, or a code-domain resource. The nested relationship means that configuration information of the first set of antenna ports is associated with configuration information of the second set of antenna ports, and the configuration information of the second set of antenna ports is obtained based on the configuration information of the first set of antenna ports. The first set of antenna ports may be one or more antenna ports of the multiple sets of antenna ports, and the second set of antenna ports may be one or more antenna ports of the multiple sets of antenna ports. The first set may be a TXRU set or other information sets.

According to the method for signal transmission provided by the embodiments of the present application, by carrying the multiple sets of antenna port information in one piece of CSI measurement configuration information or configuring the multiple associated CSI measurement configuration information, the UE obtains the multiple sets of the CSI information for the multiple sets of antenna ports through the multiple measurements. Not only the resource overhead for the relevant CSI configuration, the measurement, and/or the report is reduced, more accurate link quality information is provided to the base station, the network performance is improved and the network energy consumption is reduced.

In some embodiments, the one set of CSI measurement configuration information being configured with the multiple sets of antenna port configuration information includes one or more of following configuration manners:
each set of CSI measurement configuration information being configured with report quality information for multiple sets of antenna ports;
each set of CSI measurement configuration information being configured with report configuration type information for multiple sets of antenna ports;
each set of CSI measurement configuration information being configured with a time domain parameter in report configuration type information for multiple sets of antenna ports;
each set of CSI measurement configuration information being configured with a frequency domain parameter in report configuration type information for multiple sets of antenna ports; or
each set of CSI measurement configuration information being configured with a codebook configuration parameter for multiple sets of antenna ports.

In an embodiment, according to one set of CSI measurement configuration information being configured with multiple sets of antenna port configuration information, the multiple sets of antenna port configuration information may be understood as the configuration information for the multiple sets of antenna ports, including: the report quality information (reportQuantity) for the multiple sets of antenna ports, the report configuration type information (reportConfigType) for the multiple sets of antenna ports, the time domain parameter within the report configuration type information for the multiple sets of antenna ports, the frequency domain parameter within the report configuration type information for the multiple sets of antenna ports, or the codebook configuration parameter (codebookconfig) for the multiple sets of antenna ports. The configuration of the multiple sets of antenna port configuration information is used for the indication of the multiple sets of CSI for the multiple sets of antenna ports, where the indication of CSI includes the configuration, the measurement, and the report of CSI.

The report quality information is used to indicate information of the measurement and/or the report of CSI, including at least one of: "none", "cri-RI-PMI-CQI", "cri-RI-i1", "cri-RI-i1-CQI", "cri-RI-CQI", "cri-RSRP", "cri-SINR", "ssb-Index-RSRP", "ssb-Index-SINR", or "cri-RI-LI-PMI-CQI".

The report configuration type information is used for the configuration of the type of the measurement and/or the report of CSI, and the report configuration type information includes at least one of: a periodic CSI measurement and/or report, a semi-persistent CSI measurement and/or report based on PUSCH transmission, a semi-persistent CSI measurement and/or report based on PUCCH transmission, or an aperiodic measurement and/or report.

The time domain parameter within the report configuration type information includes at least one of: the period and/or a time offset for the periodic CSI measurement and/or report, the period and/or a time offset for the semi-persistent CSI measurement and/or report based on the PUSCH transmission, the period and/or a time offset for the semi-persistent CSI measurement and/or report based on the PUCCH transmission, or a time offset for the aperiodic CSI measurement and/or report.

The frequency domain parameter within the report configuration type information includes at least one of: a frequency domain resource for the periodic CSI measurement and/or report, a frequency domain resource for the semi-persistent CSI measurement and/or report based on the PUSCH transmission, a frequency domain resource for the semi-persistent CSI measurement and/or report based on the PUCCH transmission, or a frequency domain resource for the aperiodic CSI measurement and/or report.

For example, each CSI report configuration information is configured with the report quality information for the multiple sets of antenna ports, and is used for the indication of the multiple sets of CSI for the multiple sets of antenna ports.

For another example, each CSI report configuration information is configured with a CSI resource indicator (CRI) for the multiple sets of antenna ports, and is used for the indication of the multiple sets of CSI for the multiple sets of antenna ports.

For another example, each CSI report configuration information is configured with a CSI report periodicity and offset information (CSI-ReportPeriodicityAndOffset) for the multiple sets of antenna ports, and is used for the indication of the multiple sets of CSI for the multiple sets of antenna ports.

For another example, each CSI report configuration information is configured with PUCCH-CSI-Resource for the multiple sets of antenna ports, and is used for the indication of the multiple sets of CSI for the multiple sets of antenna ports.

According to the method for signal transmission provided by the embodiments of the present application, by carrying the multiple sets of antenna port information in one piece of CSI measurement configuration information, the UE obtains the multiple sets of the CSI information for the multiple sets of antenna ports through the multiple measurements. Not only the resource overhead for the relevant CSI configuration, the measurement, and/or the report is reduced, more accurate link quality information is provided to the base station, the network performance is improved and the network energy consumption is reduced.

In some embodiments, the configuration manner, of each set of CSI measurement configuration information being configured with report quality information of multiple sets of antenna ports, includes one or more of following manners:
being configured with multiple sets of the report quality information, where each set of the report quality information corresponds to different antenna ports; or
being configured with one set of the report quality information including multiple sets of report quality parameters, where each set of report quality parameters corresponds to different antenna ports.

In an embodiment, according to one set of CSI measurement configuration information being configured with multiple sets of antenna port configuration information, the multiple sets of antenna port configuration information may be understood as the configuration information for the multiple sets of antenna ports, including: the report quality information for the multiple sets of antenna ports, the report configuration type information for the multiple sets of antenna ports, the time domain parameter within the report configuration type information for the multiple sets of antenna ports, the frequency domain parameter within the report configuration type information for the multiple sets of antenna ports, or the codebook configuration parameter for the multiple sets of antenna ports. The configuration of the multiple sets of antenna port configuration information is used for the indication of the multiple sets of CSI for the multiple sets of antenna ports, where the indication of CSI includes the configuration, the measurement, and the report of CSI.

Each set of CSI measurement configuration information being configured with report quality information for the multiple sets of antenna ports may be that each set of the CSI measurement configuration information is configured with the report quality information for the multiple sets of antenna ports, and each set of the report quality information corresponds to different antenna ports. Each set of CSI measurement configuration information being configured with report quality information for the multiple sets of antenna ports may further be that each set of the CSI measurement configuration information is configured with one set of the report quality information, and the one set of the report quality information includes multiple sets of report quality parameters, and each set of the report quality parameter corresponds to different antenna ports.

For example, each CSI report configuration information is configured with the report quality information for the multiple sets of antenna ports, and is used for the indication of the multiple the sets of CSI for the multiple sets of antenna ports.

For another example, each CSI report configuration information is configured with a CRI for the multiple sets of antenna ports, and is used for the indication of the multiple sets of CSI for the multiple sets of antenna ports.

According to the method for signal transmission provided by the embodiments of the present application, by carrying the multiple sets of antenna port information in one piece of CSI measurement configuration information, the UE obtains the multiple sets of the CSI information for the multiple sets of antenna ports through the multiple measurements. Not only the resource overhead for the relevant CSI configuration, the measurement, and/or the report is reduced, more accurate link quality information is provided to the base station, the network performance is improved and the network energy consumption is reduced.

In some embodiments, an antenna port, corresponding to multiple sets of associated antenna port configuration information in one CSI measurement configuration information group, is a maximum antenna port configured by the network device or a set of antenna ports supporting adjustment.

In an embodiment, the configuration manner of the multiple sets of antenna port configuration information and/or the multiple sets of CSI measurement configuration information may be that one set of the CSI measurement configuration information is configured with one set of the antenna port configuration information, multiple sets of the CSI measurement configuration information form the CSI measurement configuration information group, and multiple sets of the antenna port configuration information in one CSI measurement configuration information group are associated. The CSI measurement configuration information group may indicate the multiple sets of CSI information for the multiple sets of antenna ports to be obtained at the second moment. The terminal performs the CSI measurements based on the obtained multiple sets of antenna port information and/or the CSI measurement configuration information, obtains the information including the multiple sets of CSI corresponding to the multiple sets of antenna ports, and transmits CSI via the first message at the second moment.

The multiple sets of antenna ports may have the nested relationship within the same time unit, or be orthogonal in terms of the time resource, the frequency resource, and/or the code-domain resource. The nested relationship means that the configuration information of the first set of antenna ports is associated with the configuration information of the second set of antenna ports, and the configuration information of the second set of antenna ports is obtained based on the configuration information of the first set of antenna ports. The first set of antenna ports may be one or more antenna ports for the multiple sets of antenna ports, and the second set of antenna port may be one or more antenna ports for the multiple sets of antenna ports.

According to the method for signal transmission provided by the embodiments of the present application, by configuring the multiple associated CSI measurement configuration information, the UE obtains the multiple sets of the CSI information for the multiple sets of antenna ports through the multiple measurements. Not only the resource overhead for the relevant CSI configuration, the measurement, and/or the report is reduced, more accurate link quality information is provided to the base station, the network performance is improved and the network energy consumption is reduced.

In some embodiments, measuring the multiple sets of CSI for the multiple sets of antenna ports based on the multiple sets of antenna port configuration information and/or the multiple sets of CSI measurement configuration information, and determining the information of the multiple sets of CSI corresponding to the multiple sets of antenna ports includes:
in case that one set of CSI measurement configuration information is configured with multiple sets of antenna port configuration information, performing one or more CSI measurements based on one set of CSI measurement configuration information in the multiple sets of CSI measurement configuration information and multiple sets of antenna port configuration information corresponding to the one set of CSI measurement configuration information, and determining the information of the multiple sets of CSI corresponding to the multiple sets of antenna ports.

In an embodiment, the configuration manner of the multiple sets of antenna port configuration information and/or the multiple sets of CSI measurement configuration information may be that one set of CSI measurement configuration information is configured with the multiple sets of antenna port configuration information. The terminal performs the measurement for multiple sets of the CSI for the multiple sets of antenna ports based on the obtained multiple sets of antenna port configuration information and/or the CSI measurement configuration information, obtains the information including the multiple sets of CSI corresponding to the multiple sets of antenna ports, and transmits CSI via the first message at the second moment.

For example, the terminal receives the first CSI measurement configuration information and the multiple sets of antenna port configuration information corresponding to the first CSI measurement configuration information, the second CSI measurement configuration information and the multiple sets of antenna port configuration information corresponding to the second CSI measurement configuration information. The terminal may perform one CSI measurement based on the first CSI measurement configuration information and the multiple sets of antenna port configuration information corresponding to the first CSI measurement configuration information, and obtain the information of the multiple sets of CSI.

For another example, the terminal may perform multiple CSI measurements based on the first CSI measurement configuration information, the second CSI measurement configuration information, and multiple sets of antenna port configuration information respectively corresponding to the CSI measurement configuration information, and obtain the information of the multiple sets of CSI.

According to the method for signal transmission provided by the embodiments of the present application, by carrying the multiple sets of antenna port information in one piece of CSI measurement configuration information, the UE obtains the multiple sets of the CSI information for the multiple sets of antenna ports through the multiple measurements. Not only the resource overhead for the relevant CSI configuration, the measurement, and/or the report is reduced, more accurate link quality information is provided to the base station, the network performance is improved and the network energy consumption is reduced.

In some embodiments, measuring the multiple sets of CSI for the multiple sets of antenna ports based on the multiple sets of antenna port configuration information and/or the multiple sets of CSI measurement configuration information, and determining the information of the multiple sets of CSI corresponding to the multiple sets of antenna ports includes:
in case that one set of CSI measurement configuration information is configured with one set of antenna port configuration information, performing one or more CSI measurements based on one set of CSI measurement configuration information and one set of antenna port configuration information in each CSI measurement configuration information group, and determining the information of the multiple sets of CSI corresponding to the multiple sets of antenna ports.

In an embodiment, the configuration manner of the multiple sets of antenna port configuration information and/or the multiple sets of CSI measurement configuration information may be that one set of the CSI measurement configuration information is configured with one set of the antenna port configuration information, multiple sets of the CSI measurement configuration information form the CSI measurement configuration information group, and multiple sets of the antenna port configuration information in one CSI measurement configuration information group are associated. The CSI measurement configuration information group may indicate the multiple sets of CSI information for the multiple sets of antenna ports to be obtained at the second moment. The terminal performs the CSI measurements based on the obtained multiple sets of antenna port information and/or the CSI measurement configuration information, obtains the information of the multiple sets of CSI corresponding to the multiple sets of antenna ports, and transmits CSI via the first message at the second moment.

For example, the terminal performs one CSI measurement based on the received multiple sets of antenna port configuration information to be measured and reported, and obtains the information of the multiple sets of CSI.

For another example, the terminal performs multiple CSI measurements based on the received multiple sets of antenna port configuration information to be measured and reported, and obtains the information of the multiple sets of CSI.

According to the method for signal transmission provided by the embodiments of the present application, by configuring the multiple associated CSI measurement configuration information, the UE obtains the multiple sets of the CSI information for the multiple sets of antenna ports through the multiple measurements. Not only the resource overhead for the relevant CSI configuration, the measurement, and/or the report is reduced, more accurate link quality information is provided to the base station, the network performance is improved and the network energy consumption is reduced.

In some embodiments, measuring the multiple sets of CSI for the multiple sets of antenna ports based on the multiple sets of antenna port configuration information and/or the multiple sets of CSI measurement configuration information, and determining the information of the multiple sets of CSI corresponding to the multiple sets of antenna ports includes:
in case that a configuration manner of the multiple sets of antenna port configuration information and/or the multiple sets of CSI measurement configuration information is that each beam management function is associated with one first set, performing one or more CSI measurements based on an associated first set, and determining the information of the multiple sets of CSI corresponding to the multiple sets of antenna ports.

In an embodiment, the configuration manner of the multiple sets of antenna port configuration information and/or the multiple sets of CSI measurement configuration information may further be that each beam management function is associated with one first set, where the first set includes at least one set of the antenna port configuration information and/or at least one set of the CSI measurement configuration information. The first set may indicate the multiple sets of CSI information for the multiple sets of antenna ports to be obtained at the second moment. The terminal performs the CSI measurements based on the obtained multiple sets of antenna port information and/or the CSI measurement configuration information, obtains the information of the multiple sets of CSI corresponding to the multiple sets of antenna ports, and transmits CSI via the first message at the second moment.

For example, the terminal performs one CSI measurement based on the received multiple sets of antenna port configuration information to be measured and reported, and obtains the information of the multiple sets of CSI.

For another example, the terminal performs multiple CSI measurements based on the received multiple sets of antenna port configuration information to be measured and reported, and obtains the information of the multiple sets of CSI.

According to the method for signal transmission provided by the embodiments of the present application, by associating one first set for each beam management function, and the first set includes at least one set of the antenna port configuration information and/or at least one set of the CSI measurement configuration information, the UE obtains the multiple sets of the CSI information for the multiple sets of antenna ports through the multiple measurements. Not only the resource overhead for the relevant CSI configuration, the measurement, and/or the report is reduced, more accurate link quality information is provided to the base station, the network performance is improved and the network energy consumption is reduced.

In some embodiments, the multiple sets of antenna ports have a nested relationship on a same time unit; and/or
the multiple sets of antenna ports are orthogonal in at least one of a time resource, a frequency resource, or a code-domain resource.

In an embodiment, the multiple sets of antenna ports may have the nested relationship within the same time unit. The multiple sets of antenna ports may be orthogonal in the time resource, in the frequency domain, or in the code domain resource.

The nested relationship may mean that the configuration information of the first set of antenna ports is associated with the configuration information of the second set of antenna ports, and the configuration information of the second set of antenna ports may be obtained based on the configuration information of the first set of antenna ports. The first set of antenna ports may be one or more antenna ports of the multiple sets of antenna ports, and the second set of antenna ports may be one or more antenna ports of the multiple sets of antenna ports.

According to the method for signal transmission provided by the embodiments of the present application, by associating the multiple sets of antenna ports, the UE obtains the multiple sets of the CSI information for the multiple sets of antenna ports through the multiple measurements. Not only the resource overhead for the relevant CSI configuration, the measurement, and/or the report is reduced, more accurate link quality information is provided to the base station, the network performance is improved and the network energy consumption is reduced..

In some embodiments, the method further includes:
obtaining a measurement reference signal transmitted from the network device.

In an embodiment, the network device transmits the reference signal for the CSI measurement to the terminal. The terminal receives the reference signal for the CSI measurement transmitted from the network device, performs the measurements on the multiple sets of CSI for the multiple sets of antenna ports on the reference signal based on the multiple sets of antenna port configuration information and/or the multiple sets of CSI measurement configuration information, and obtains the information of the multiple sets of CSI corresponding to the multiple sets of antenna ports.

Taking the reference signal, transmitted from the network device and received by the terminal, as the CSI-RS resource as the example, the first CSI-RS resource includes the first set of antenna port configuration information and the second set of antenna port configuration information, where the first set of antenna port configuration information may be the current maximum antenna port information of the base station and the second set of antenna port configuration information may be other antenna port information except the maximum antenna port information.

According to the method for signal transmission provided by the embodiments of the present application, by carrying the multiple sets of antenna port information in one piece of CSI measurement configuration information or configuring the multiple associated CSI measurement configuration information, the UE obtains the multiple sets of the CSI information for the multiple sets of antenna ports through the multiple measurements. Not only the resource overhead for the relevant CSI configuration, the measurement, and/or the report is reduced, more accurate link quality information is provided to the base station, the network performance is improved and the network energy consumption is reduced.

In some embodiments, the information of the multiple sets of CSI is included in a first message.

In an embodiment, the terminal transmits the information of the multiple sets of CSI to the network device via the first message at the second moment, and the network device receives the information of the multiple sets of CSI via the first message at the third moment.

The second moment may be the absolute time or the relative time of the starting point, or the second moment is the second time window of the starting point. The first message includes the information transmitted by the multiple sets of CSI, and the first message may include the PUCCH or the PUSCH. The third moment is the absolute time or the relative time of the starting point, or the third moment is the third time window of the starting point.

According to the method for signal transmission provided by the embodiments of the present application, by carrying the multiple sets of antenna port information in one piece of CSI measurement configuration information or configuring the multiple associated CSI measurement configuration information, the UE obtains the multiple sets of the CSI information for the multiple sets of antenna ports through the multiple measurements. Not only the resource overhead for the relevant CSI configuration, the measurement, and/or the report is reduced, more accurate link quality information is provided to the base station, the network performance is improved and the network energy consumption is reduced.

The method in the above embodiments are further described below with several specific examples.

### Illustration 1

One CSI-RS resource information is configured with multiple sets of antenna port configuration information. The terminal performs the measurement for multiple sets of the CSI for the multiple sets of antenna ports based on the obtained multiple sets of antenna port configuration information and/or the CSI measurement configuration information, obtains the information including the multiple sets of CSI corresponding to the multiple sets of antenna ports, and transmits CSI via the first message at the second moment.

### Terminal side

Step 1: UE obtains the multiple sets of antenna port information and/or the CSI measurement information at the first moment.

The first moment includes at least one of: the absolute time or the relative time of the starting point, or the first time window of the starting point. The multiple sets of antenna port information includes at least two antenna port information. The antenna port information includes the relevant configuration of CSI-RS.

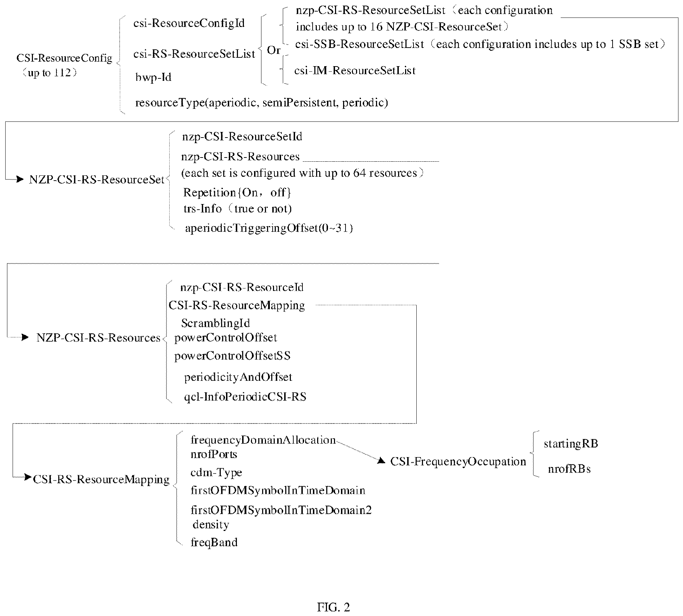

Fig. 2 is a diagram of configuration for CSI-RS according to an embodiment of the present application. As shown in Fig. 2, the CSI resource configuration information includes at least one of: "CSI-RS-ResourceMapping", "powerControlOffset", or "powerControlOffsetSS".

The multiple sets of CSI measurement information, such as the CSI measurement configuration information (CSI-MeasConfig), i.e., the multiple sets of CSI information, includes at least two pieces of CSI information, and each piece of CSI information corresponds to different antenna port configuration information. The CSI information includes at least one of: "none", "cri-RI-PMI-CQI", "cri-RI-i1", "cri-RI-i1-CQI", "cri-RI-CQI", "cri-RSRP", "cri-SINR", "ssb-Index-RSRP", "ssb-Index-SINR", or "cri-RI-LI-PMI-CQI".

UE may obtain the multiple sets of antenna port information and/or the CSI measurement information at the first moment according to at least one of indication methods:
indication method 1: the multiple sets of antenna port information and/or the CSI measurement information is configured via RRC, and the antenna port information and/or the CSI measurement information to be measured and/or reported is dynamically indicated or activated via DCI; or
indication method 2: the multiple sets of antenna port information and/or the CSI measurement information is configured via the dynamic signaling, such as DCI, and MAC-CE.

The configuration method of the multiple sets of antenna port information and/or the CSI measurement information includes at least one of the following methods.

Method 1: each CSI report configuration information is configured with the report quality information for the multiple sets of antenna ports.

Configuration manner 1: the base station configures multiple sets of the report quality information for the indication of the multiple sets of CSI for the multiple sets of antenna ports. The indication of the multiple sets of CSI includes the configuration, the measurement and the report of CSI. The multiple sets of report quality information includes at least two pieces of report quality information, and each piece of report quality information corresponds to the CSI information of different antenna ports.

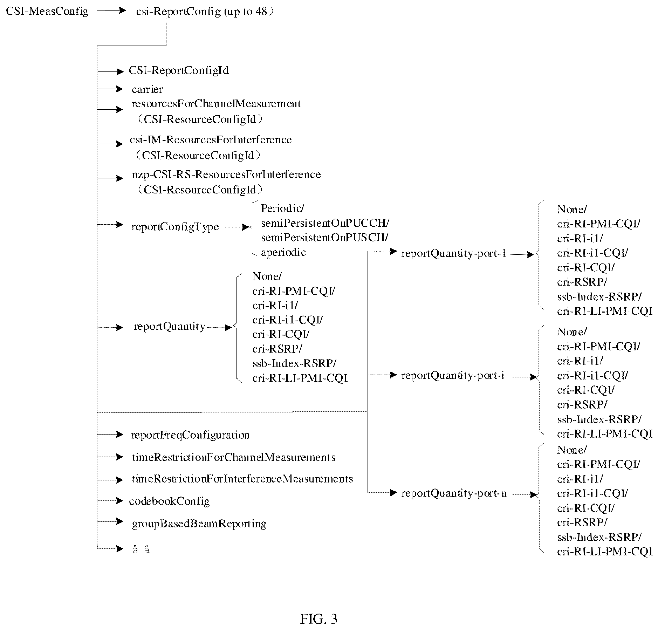

FIG. 3 is a first diagram of CSI information configuration of antenna port for report configuration information according to an embodiment of the present application. As shown in FIG. 3, the report quality information is used to indicate the information of the measurement and/or the report of CSI, including at least one of: "none", "cri-RI-PMI-CQI", "cri-RI-i1", "cri-RI-i1-CQI", "cri-RI-CQI", "cri-RSRP", "cri-SINR", "ssb-Index-RSRP", "ssb-Index-SINR", or "cri-RI-LI-PMI-CQI".

Configuration manner 2: the base station configures one set of the report quality information, where each of different parameters in the report quality information includes multiple sets of parameters.

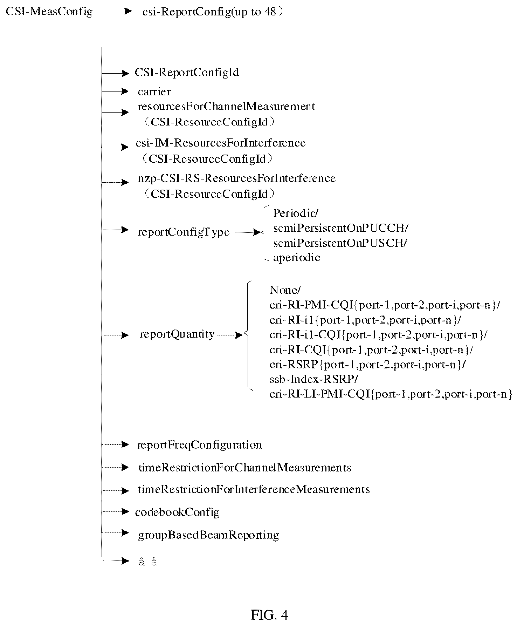

FIG. 4 is a second diagram of CSI information configuration of antenna port for report configuration information according to an embodiment of the present application. As shown in FIG. 4, the report quality information includes at least one of: multiple sets of "CRI-RI-PMI-CQI", multiple sets of "cri-RI-i1",multiple sets of "cri-RI-i1-CQI", multiple sets of "cri-RI-CQI", multiple sets of "cri-RSRP", multiple sets of "cri-SINR", multiple sets of "ssb-Index-RSRP", multiple sets of "ssb-Index-RSRP", multiple sets of "cri-RI-LI-PMI-CQI", multiple sets of "rank indicator (RI)", multiple sets of "precoding matrix indicator (PMI)", multiple sets of "channel quantity indicator (CQI)", multiple sets of "i1", multiple sets of "reference signal received power (RSRP)", or multiple sets of "signal interference noise ratio (SINR)". The report quality information is used to indicate the multiple sets of CSI for the multiple sets of antenna ports, and different parameters in each reportQauntity correspond to the CSI information of different antenna ports.

Method 2: each CSI report configuration information is configured with the report configuration type information for the multiple sets of antenna ports.

Configuration manner 3: the base station configures multiple sets of the report configuration type information for the indication of the multiple sets of CSI for the multiple sets of antenna ports.

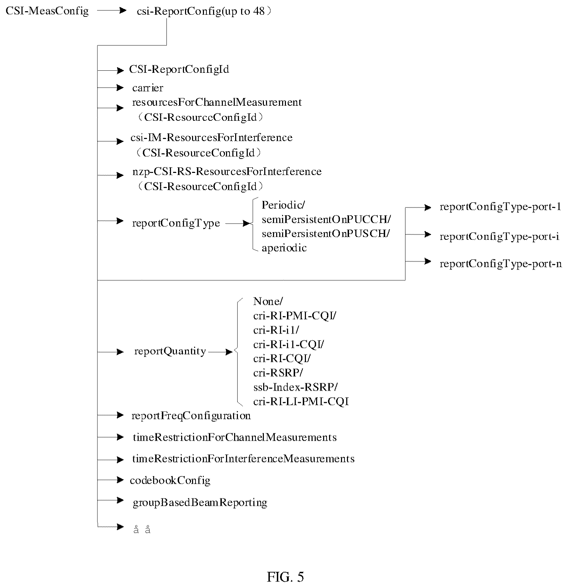

FIG. 5 is a third diagram of CSI information configuration of antenna port for report configuration information according to an embodiment of the present application. As shown in FIG. 5, the report configuration type information is used to configure the type of the CSI measurement and/or report, at least one of: the periodic CSI measurement and/or report, the semi-persistent CSI measurement and/or report based on the PUSCH transmission, the semi-persistent CSI measurement and/or report based on the PUCCH transmission, and the aperiodic CSI measurement and/or report.

Method 3: each CSI report configuration information is configured with the time domain parameter within the report configuration type information for the multiple sets of antenna ports.

The time domain parameter within the report configuration type information includes at least one of: the period and/or the time offset for the periodic CSI measurement and/or report, the period and/or the time offset for the semi-persistent CSI measurement and/or report based on the PUSCH transmission, the period and/or the time offset for the semi-persistent CSI measurement and/or report based on the PUCCH transmission, or the time offset for the aperiodic CSI measurement and/or report.

The time offset may be a time offset based on a relative reference time, and the reference time may be at least one of: a starting point of the period, an absolute time position, a slot number, a symbol number, a sub-frame number, a wireless frame number, or a transmission moment of a first signal or a first signaling. For example, a transmission moment of a physical downlink control channel (PDCCH), a transmission moment of a physical downlink shared channel (PDSCH), a transmission moment of the PUSCH, or, a transmission moment of a synchronization signal block (SSB), etc.

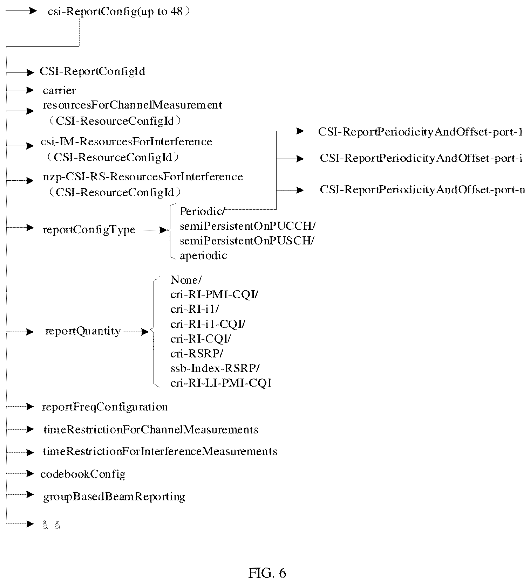

FIG. 6 is a fourth diagram of CSI information configuration of antenna port for report configuration information according to an embodiment of the present application. As shown in FIG. 6, each CSI report configuration information is configured with the time domain parameter within the report configuration type information for the multiple sets of antenna ports. Taking the periodic CSI as an example, the CSI report configuration information configures multiple sets of CSI report period and offset information for the indication of the multiple sets of CSI of the multiple sets of antenna ports.

Method 4: each CSI report configuration information is configured with the frequency domain parameter within the report configuration type information for the multiple sets of antenna ports.

The frequency domain parameter within the report configuration type information includes at least one of: the frequency domain resource for the periodic CSI measurement and/or report, the frequency domain resource for the semi-persistent CSI measurement and/or report based on the PUSCH transmission, the frequency domain resource for the semi-persistent CSI measurement and/or report based on the PUCCH transmission, or the frequency domain resource for the aperiodic CSI measurement and/or report.

The frequency domain resource includes a resource for CSI measurement and/or report, and includes at least one of: PUCCH, or PUSCH.

The frequency domain resource includes at least one radio bear (RB).

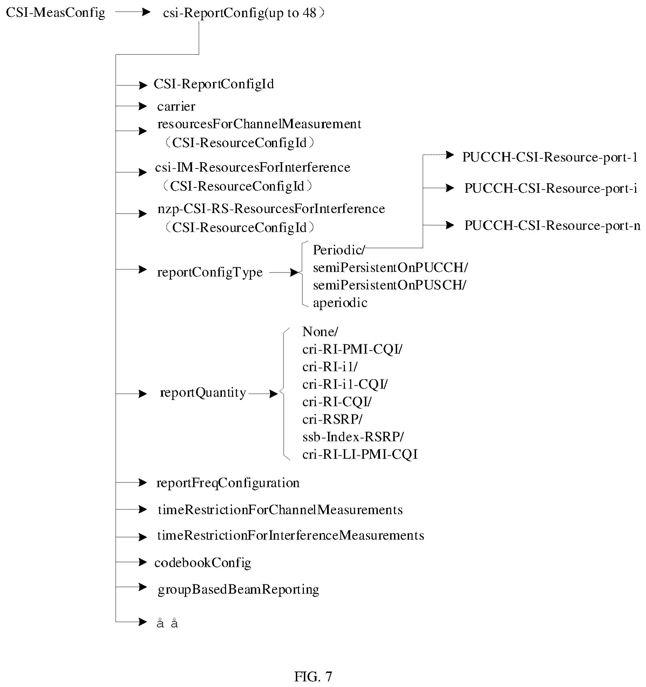

FIG. 7 is a fifth diagram of CSI information configuration of antenna port for report configuration information according to an embodiment of the present application. As shown in FIG. 7, each CSI report configuration information is configured with the frequency domain parameter within the report configuration type information for the multiple sets of antenna ports. Taking the periodic CSI as an example, CSI report configuration information configures multiple sets of PUCCH-CSI-Resource for the indication of the multiple sets of CSI of the multiple sets of antenna ports.

Step 2: UE receives the reference signal of the CSI measurement.

In an embodiment, the reference signal of the CSI measurement includes at least one of CSI-RS or SSB. The CSI-RS includes at least one of follow: non zero power-CSI-RS (NZP-CSI-RS), zero power-CSI-RS (ZP-CSI-RS), or channel state information-interference management (CSI-IM).

The reference signal of the CSI measurement includes at least two sets of antenna port information. In an embodiment, the reference signal of the CSI measurement is the first CSI-RS resource, that is, the first CSI-RS resource includes at least two sets of antenna port information. The first CSI-RS resource includes the first set of antenna port configuration information and the second set of antenna port configuration information. The first set of antenna port configuration information is the current maximum antenna port information of the base station and the second set of antenna port configuration information is other antenna port information except the maximum antenna port information.

Example 1: the first CSI-RS resource includes the current maximum antenna port configuration information of the base station, and other antenna port information may be obtained based on the current maximum antenna port configuration information of the base station. For example, the current maximum antenna port configuration information of the base station is the configuration information of 32 antenna ports and the configuration information of 16 antenna ports may be obtained based on the configuration information of 32 antenna ports.

Other antenna port information may be obtained based on the current maximum antenna port configuration information of the base station, including: the other antenna port information is a subset of the maximum antenna port configuration information. For example, the configuration information of the 16 antenna ports may be obtained by selecting a subset of the configuration information of the 32 antenna ports.

Example 2: the first CSI-RS resource includes the current maximum antenna port configuration information of the base station, such as the configuration information of the 32 antenna ports. Other parameter configuration of the first CSI-RS resource includes other antenna port information, such as port information of a resource configuration parameter.

Step 3: UE performs the CSI measurement and/or report based on the obtained CSI measurement information.

In an embodiment, performing the CSI measurement and/or report based on the obtained CSI measurement information includes that UE performs the CSI measurement based on the obtained antenna port information and the CSI measurement information corresponding to the antenna port.

Performing the CSI measurement and/or report based on the obtained CSI measurement information includes that UE receives the first CSI-RS resource, performs the multiple CSI measurements based on the received multiple sets of antenna port information and/or the CSI information to be measured and reported, and obtains the information of the multiple sets of CSI.

For example, the CSI information of the first set of antenna ports is obtained by measuring the first antenna port configuration of the first CSI-RS resource.

For another example, the CSI information of the second set of antenna ports is obtained by measuring the second antenna port configuration of the first CSI-RS resource.

Step 4: UE transmits the multiple sets of the CSI information via the first message at the second moment.

The second moment includes at least one of: the second moment is the absolute time or the relative time of the starting point, or the second moment is the second time window of the starting point.

The first message is the information for the transmission of the multiple sets of CSI, and the first message includes at least one of: PUCCH, or PUSCH.

### Base station side

Step 1: the base station configures and transmits the multiple sets of antenna port information and/or the CSI measurement information.

The multiple sets of antenna port information is same as the multiple sets of antenna port information in step 1 on the terminal side.

The multiple sets of CSI measurement information is same as the multiple sets of CSI measurement information in step 1 on the terminal side.

The transmission includes the transmission of the multiple sets of antenna port information and/or the transmission of the CSI measurement information, and the indication manner of a specific transmission information is same as step 1 on the terminal side.

The specific configuration method is same as step 1 on the terminal side.

Step 2: the base station transmits the reference signal of the CSI measurement.

In an embodiment, the reference signal of the CSI measurement is same as the reference signal in step 2 on the terminal side.

Step 3: the base station receives the multiple sets of the CSI information transmitted via the first message at the third moment.

The third moment includes at least one of: the third moment is the absolute time or the relative time of the starting point, or the third moment is the third time window of the starting point.

The first message includes multiple sets of CSI information transmitted, and may include at least one of: PUCCH, or PUSCH.

The multiple sets of CSI information, as described in steps 1 to 3, are not repeated here.

### Illustration 2

One CSI-RS resource is configured with one set of antenna port information, and is configured with a CSI-RS resource group. The CSI-RS resource group is configured with the multiple sets of associated antenna port information and/or the multiple sets of CSI information, which is used to indicate the multiple sets of CSI information of the multiple sets of antenna ports to be obtained at the second moment. The terminal performs the CSI measurements based on the obtained multiple sets of antenna port configuration information and/or the CSI measurement configuration information, obtains the multiple sets of CSI information corresponding to the multiple sets of antenna ports, and transmits CSI via the first message at the second moment.

### Terminal side

Step 1: UE obtains the multiple sets of antenna port information and/or the CSI measurement information at the first moment.

The specific implementation manner is same as in illustration 1.

The differences are that the base station configures the CSI-RS resource group, for indicating the multiple sets of associated antenna port information and/or multiple sets of CSI information; the association relationship is the association relationship between antenna ports; a set of adjustable antenna ports that a corresponding base station may support under the current maximum antenna port configuration.

The CSI-RS resource group includes the first CSI-RS resource and the second CSI-RS resource. The first CSI-RS resource includes the first set of antenna port configuration information. In an embodiment, the first set of antenna port configuration may be the current maximum antenna port information of the base station and/or CSI measurement report information.

The second CSI-RS resource includes the second set of antenna port configuration information. In an embodiment, the second set of antenna port configuration may be other antenna port information except the maximum antenna port information and/or CSI measurement report information.

Step 2: UE receives the reference signal of the multiple sets of the CSI measurement.

The specific implementation manner is same as in illustration 1.

The differences are that the first CSI-RS resource includes the current maximum antenna port configuration information of the base station and/or the corresponding CSI measurement report information; the second CSI-RS resource includes other antenna port information and/or the corresponding CSI measurement report information. For example, the first CSI-RS resource includes the configuration information of 32 antenna ports and/or the corresponding CSI measurement report information of the base station, and the second CSI-RS resource includes the configuration information of 16 antenna ports and/or the corresponding CSI measurement report information of the base station.

Step 3: UE performs the CSI measurement and/or report based on the obtained multiple sets of CSI measurement information and multiple sets of CSI-RS resources.

UE receives the first CSI-RS resource, performs the multiple CSI measurements based on the received information of the first set of antenna ports to be measured and reported, and obtains CSI of the first set of antenna ports. UE receives the second CSI-RS, performs multiple CSI measurements based on the received information of the second set of antenna ports to be measured and/or reported and obtains the CSI information of the second set of antenna ports. CSI of the first set of antenna ports may be obtained by measuring the first antenna port configuration of the first CSI-RS resource, and CSI of the second set of antenna ports may be obtained by measuring the second antenna port configuration of the second CSI-RS resource.

The behaviors of UE are limited as following.
(1) For the period CSI measurement and/or report, in each CSI measurement and/or report configuration, a maximum number of the period CSI measurement and/or report on each BWP is limited to be greater than 4 and less than or equal to 256.
   4<maxNumberPeriodicCSI-PerBWP-ForCSI-Report<=256
(2) For the aperiodic CSI measurement and/or report, in each CSI measure and/or report configuration, a maximum number of the aperiodic CSI measurement and/or report on each BWP is limited to be greater than 4 and less than or equal to 256.
   4<maxNumberAperiodicCSI-PerBWP-ForCSI-Report<=256
(3) For the semi-persistent CSI measurement and/or report, in each CSI measurement and/or report configuration, a maximum number of the semi-persistent CSI measurement and/or report on each BWP is limited to be more than 4 and less than or equal to 256.
   4<maxNumberSemiPersistentCSI-PerBWP-ForCSI-Report<=256
(4) For the aperiodic CSI measurement and/or report, in each beam measurement and/or report configuration, a maximum number of the aperiodic CSI measurement and/or report on each BWP is limited to be greater than 4 and less than or equal to 256.
   4<maxNumberPeriodicCSI-PerBWP-ForBeamReport<=256
(5) For the aperiodic CSI measurement and/or report, under each carrier, a maximum number of the aperiodic CSI measurement and/or report on each triggering state is limited to be greater than 4 and less than or equal to 1024.
   128<maxNumberAperiodicCSI-triggeringStatePerCC<=1024
(6) For the aperiodic CSI measurement and/or report, in each beam measurement and/or report configuration, a maximum number of the aperiodic CSI measurement and/or report on each BWP is limited to be greater than 4 and less than or equal to 256.
   4<maxNumberPeriodicCSI-PerBWP-ForBeamReport<=256
(7) For each carrier, in each CSI measurement and/or report, a maximum number of the simultaneous CSI measurement and/or report is limited to be greater than 8 and less than or equal to 256.
   8<simultaneousCSI-ReportsPerCC<=256

### Base station side

The specific embodiments of steps 1 to 3 are the same as in the example 1, and are not repeated here.

According to the method for signal transmission provided by the embodiments of the present application, by carrying the multiple sets of antenna port information in one piece of CSI measurement configuration information or configuring multiple associated CSI measurement configuration information, the UE obtains multiple sets of CSI information for the multiple sets of antenna ports through multiple measurements. Not only the resource overhead for the relevant CSI configuration, measurement, and/or report is reduced, more accurate link quality information is provided for the base station, the network performance is improved and the network energy consumption is reduced.

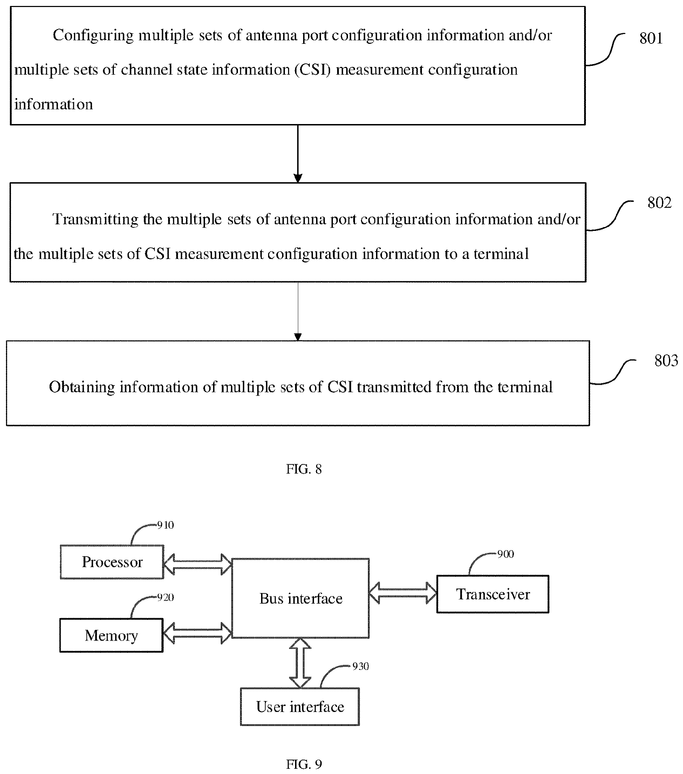

FIG. 8 is a second schematic flowchart of a method for signal transmission according to an embodiment of the present application. As shown in FIG. 8, an embodiment of the present application provides a method for signal transmission, and an execution subject of the method is a network device, such as a base station, etc. The method includes following steps.
Step 801: configuring multiple sets of antenna port configuration information and/or multiple sets of channel state information (CSI) measurement configuration information;
Step 802: transmitting the multiple sets of antenna port configuration information and/or the multiple sets of CSI measurement configuration information to a terminal; and
Step 803: obtaining information of multiple sets of CSI transmitted from the terminal.

In some embodiments, transmitting the multiple sets of antenna port configuration information and/or the CSI measurement configuration information to the terminal includes:
transmitting simultaneously, at a first moment, the multiple sets of antenna port configuration information and/or the multiple sets of CSI measurement configuration information to the terminal.

In some embodiments, transmitting the multiple sets of antenna port configuration information and/or the multiple sets of CSI measurement configuration information to the terminal includes:
transmitting respectively, at different moments, one or more sets of antenna port configuration information and/or one or more sets of CSI measurement configuration information to the terminal.

In some embodiments, transmitting the multiple sets of antenna port configuration information and/or the multiple sets of CSI measurement configuration information to the terminal includes:
transmitting indication information, to the terminal, for multiple sets of antenna ports needed to be measured and/or the multiple sets of CSI measurement configuration information, where the indication information is used to determine the multiple sets of antenna port configuration information and/or the multiple sets of CSI measurement configuration information.

In some embodiments, a configuration manner of the multiple sets of antenna port configuration information and/or the multiple sets of CSI measurement configuration information includes one or more of following manners:
one set of CSI measurement configuration information being configured with multiple sets of antenna port configuration information;
one set of CSI measurement configuration information being configured with one set of antenna port configuration information, where multiple sets of CSI measurement configuration information form a CSI measurement configuration information group, and multiple sets of antenna port configuration information in one CSI measurement configuration information group are associated; or
each beam management function being associated with one first set, where the first set includes at least one set of antenna port configuration information and/or at least one set of CSI measurement configuration information.

In some embodiments, the one set of CSI measurement configuration information being configured with the multiple sets of antenna port configuration information includes one or more of following configuration manners:
each set of CSI measurement configuration information being configured with report quality information for multiple sets of antenna ports;
each set of CSI measurement configuration information being configured with report configuration type information for multiple sets of antenna ports;
each set of CSI measurement configuration information being configured with a time domain parameter in report configuration type information for multiple sets of antenna ports;
each set of CSI measurement configuration information being configured with a frequency domain parameter in report configuration type information for multiple sets of antenna ports; or
each set of CSI measurement configuration information being configured with a codebook configuration parameter for multiple sets of antenna ports.

In some embodiments, the configuration manner, of each set of CSI measurement configuration information being configured with report quality information for multiple sets of antenna ports, includes one or more of following manners:
being configured with multiple sets of the report quality information, where each set of the report quality information corresponds to different antenna ports; or
being configured with one set of the report quality information including multiple sets of report quality parameters, where each set of report quality parameters corresponds to different antenna ports.

In some embodiments, an antenna port, corresponding to multiple sets of associated antenna port configuration information in one CSI measurement configuration information group, is a maximum antenna port configured by the network device or a set of antenna ports supporting adjustment.

In some embodiments, the multiple sets of antenna ports have a nested relationship on a same time unit; and/or
the multiple sets of antenna ports are orthogonal in at least one of a time resource, a frequency resource, or a code-domain resource.

In some embodiments, the method further includes:
transmitting a measurement reference signal to the terminal.

In some embodiments, obtaining the information of the multiple sets of CSI transmitted from the terminal includes:
obtaining a first message transmitted from the terminal, where the first message includes the information of the multiple sets of CSI.

In an embodiment, the method for signal transmission provided by the embodiments of the present application may refer to the above-mentioned behavioral method embodiments with the terminal as the execution subject, and may achieve the same effects. The same parts and beneficial effects in the embodiments as those in the above corresponding method embodiments are not described in detail.

FIG. 9 is a schematic structural diagram of a terminal according to an embodiment of the present application. As shown in FIG. 9, a terminal includes: a memory 920, a transceiver 900, and a processor 910; where the memory 920 is used for storing a computer program; the transceiver 900 is used for receiving and transmitting data under control of the processor 910; and the processor 910 is used for reading the computer program in the memory 920 and performing following operations:
obtaining multiple sets of antenna port configuration information and/or multiple sets of channel state information (CSI) measurement configuration information transmitted from a network device at a first moment;
measuring multiple sets of CSI for multiple sets of antenna ports based on the multiple sets of antenna port configuration information and/or the multiple sets of CSI measurement configuration information, and determining information of multiple sets of CSI corresponding to the multiple sets of antenna ports; and
transmitting the information of the multiple sets of CSI to the network device.

In an embodiment, the transceiver 900 is used for receiving and transmitting data under the control of the processor 910.

In FIG. 9, a bus architecture may include any number of interconnected buses and bridges, which are linked together through various circuits of one or more processors represented by the processor 910 and one or more memories represented by the memory 920. The bus architecture may also link together various other circuits, such as peripherals, voltage regulators, and power management circuits, etc., which are well known in the art, and therefore are not further described in the present application. The bus interface provides an interface. The transceiver 900 may include multiple elements, i.e., including a transmitter and a receiver, for providing units for communicating with various other devices over transmission media including wireless channels, wired channels, fiber optic cables, and the like. For different user equipment, a user interface 930 may be an interface with a capability of connecting external and internal devices, including but are not limited to keypads, displays, speakers, microphones, joysticks, etc.

The processor 910 is responsible for managing the bus architecture and general processing, and the memory 920 may store data used by the processor 910 when performing operations.

In some embodiments, the processor 710 may be a central processing unit (CPU), an application specific integrated circuit (ASIC), a field-programmable gate array (FPGA), or a complex programmable logic device (CPLD), the processor may also use a multi-core architecture.

The processor calls the computer program stored in the memory to perform any of the methods provided by the embodiments of the present application according to the obtained executable instructions. The processor and the memory may also be arranged to be physically separated.

In some embodiments, obtaining the multiple sets of antenna port configuration information and/or the multiple sets of CSI measurement configuration information transmitted from the network device at the first moment includes:
obtaining simultaneously, at the first moment, the multiple sets of antenna port configuration information and/or the multiple sets of CSI measurement configuration information transmitted from the network device.

In some embodiments, obtaining the multiple sets of antenna port configuration information and/or the multiple sets of CSI measurement configuration information transmitted from the network device at the first moment includes:
obtaining separately, at different moments, one or more sets of antenna port configuration information and/or one or more sets of CSI measurement configuration information transmitted from the network device, where all multiple sets of antenna port configuration information and/or all multiple sets of CSI measurement configuration information corresponding to a CSI measurement are obtained at the first moment.

In some embodiments, obtaining the multiple sets of antenna port configuration information and/or the multiple sets of CSI measurement configuration information transmitted from the network device includes:
obtaining indication information, transmitted from the network device, for multiple sets of antenna ports needed to be measured and/or the multiple sets of CSI measurement configuration information; and
determining the multiple sets of antenna port configuration information and/or the multiple sets of CSI measurement configuration information based on the indication information.

In some embodiments, a configuration manner of the multiple sets of antenna port configuration information and/or the multiple sets of CSI measurement configuration information includes one or more of following manners:
one set of CSI measurement configuration information being configured with multiple sets of antenna port configuration information;
one set of CSI measurement configuration information being configured with one set of antenna port configuration information, where multiple sets of CSI measurement configuration information form a CSI measurement configuration information group, and multiple sets of antenna port configuration information in one CSI measurement configuration information group are associated; or
each beam management function being associated with one first set, where the first set includes at least one set of antenna port configuration information and/or at least one set of CSI measurement configuration information.

In some embodiments, the one set of CSI measurement configuration information being configured with the multiple sets of antenna port configuration information includes one or more of following configuration manners:
each set of CSI measurement configuration information being configured with report quality information for multiple sets of antenna ports;
each set of CSI measurement configuration information being configured with report configuration type information for multiple sets of antenna ports;
each set of CSI measurement configuration information being configured with a time domain parameter in report configuration type information for multiple sets of antenna ports;
each set of CSI measurement configuration information being configured with a frequency domain parameter in report configuration type information for multiple sets of antenna ports; or
each set of CSI measurement configuration information being configured with a codebook configuration parameter for multiple sets of antenna ports.

In some embodiments, the configuration manner, of each set of CSI measurement configuration information being configured with report quality information for multiple sets of antenna ports, includes one or more of following manners:
being configured with multiple sets of the report quality information, where each set of the report quality information corresponds to different antenna ports; or
being configured with one set of the report quality information including multiple sets of report quality parameters, where each set of report quality parameters corresponds to different antenna ports.

In some embodiments, an antenna port, corresponding to multiple sets of associated antenna port configuration information in one CSI measurement configuration information group, is a maximum antenna port configured by the network device or a set of antenna ports supporting adjustment.

In some embodiments, measuring the multiple sets of CSI for the multiple sets of antenna ports based on the multiple sets of antenna port configuration information and/or the multiple sets of CSI measurement configuration information, and determining the information of the multiple sets of CSI corresponding to the multiple sets of antenna ports includes:
in case that one set of CSI measurement configuration information is configured with multiple sets of antenna port configuration information, performing one or more CSI measurements based on one set of CSI measurement configuration information in the multiple sets of CSI measurement configuration information and multiple sets of antenna port configuration information corresponding to the one set of CSI measurement configuration information, and determining the information of the multiple sets of CSI corresponding to the multiple sets of antenna ports.

In some embodiments, measuring the multiple sets of CSI for the multiple sets of antenna ports based on the multiple sets of antenna port configuration information and/or the multiple sets of CSI measurement configuration information, and determining the information of the multiple sets of CSI corresponding to the multiple sets of antenna ports includes:
in case that one set of CSI measurement configuration information is configured with one set of antenna port configuration information, performing one or more CSI measurements based on one set of CSI measurement configuration information and one set of antenna port configuration information in each CSI measurement configuration information group, and determining the information of the multiple sets of CSI corresponding to the multiple sets of antenna ports.

In some embodiments, measuring the multiple sets of CSI for the multiple sets of antenna ports based on the multiple sets of antenna port configuration information and/or the multiple sets of CSI measurement configuration information, and determining the information of the multiple sets of CSI corresponding to the multiple sets of antenna ports includes:
in case that a configuration manner of the multiple sets of antenna port configuration information and/or the multiple sets of CSI measurement configuration information is that each beam management function is associated with one first set, performing one or more CSI measurements based on an associated first set, and determining the information of the multiple sets of CSI corresponding to the multiple sets of antenna ports.

In some embodiments, the multiple sets of antenna ports have a nested relationship on a same time unit; and/or
the multiple sets of antenna ports are orthogonal in at least one of a time resource, a frequency resource, or a code-domain resource.

In some embodiments, the processor is further used for reading the computer program in the memory and performing following operations: obtaining a measurement reference signal transmitted from the network device.

In some embodiments, the information of the multiple sets of CSI is included in a first message.

It should be noted here that the above-mentioned terminals provided by the embodiments of the present application may implement all the method steps implemented by the above-mentioned method embodiment with the terminal as the execution subject, and may achieve the same effects. The same parts and beneficial effects in the embodiments as those in the method embodiments are not described in detail.

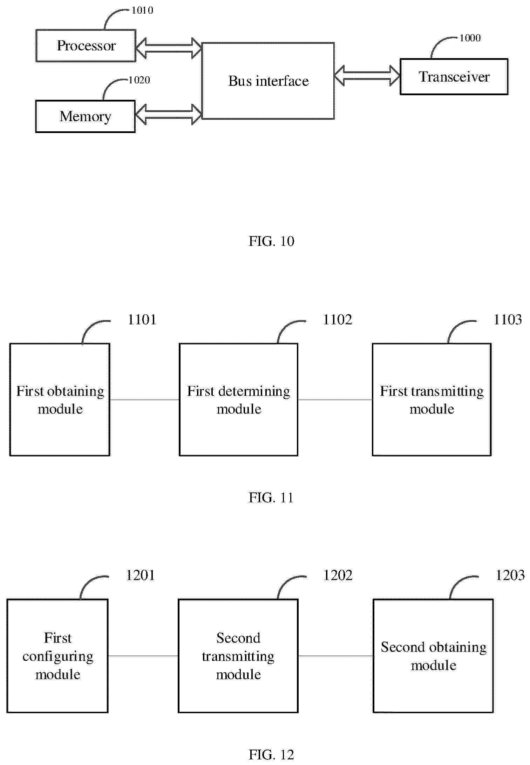

FIG. 10 is a schematic structural diagram of a network device according to an embodiment of the present application. As shown in FIG. 10, a network device includes: a memory 1020, a transceiver 1000, and a processor 1010;
where the memory 1020 is used for storing a computer program; the transceiver 1000 is used for receiving and transmitting data under control of the processor 1010; and the processor 1010 is used for reading the computer program in the memory 1020 and performing following operations:
configuring multiple sets of antenna port configuration information and/or multiple sets of channel state information (CSI) measurement configuration information;
transmitting the multiple sets of antenna port configuration information and/or the multiple sets of CSI measurement configuration information to a terminal; and
obtaining information of multiple sets of CSI transmitted from the terminal.

In an embodiment, the transceiver 1000 is used for receiving and transmitting data under the control of the processor 1010.

In FIG. 10, a bus architecture may include any number of interconnected buses and bridges, which are linked together through various circuits of one or more processors represented by the processor 1010 and one or more memories represented by the memory 1020. The bus architecture may also link together various other circuits, such as peripherals, voltage regulators, and power management circuits, etc., which are well known in the art, and therefore are not further described in the present application. The bus interface provides an interface. The transceiver 1000 may include multiple elements, i.e., including a transmitter and a receiver, for providing units for communicating with various other devices over transmission media including wireless channels, wired channels, fiber optic cables, and the like. The processor 1010 is responsible for managing the bus architecture and general processing, and the memory 1020 may store data used by the processor 1010 when performing operations.

The processor 1010 may be a central processing unit (CPU), an application specific integrated circuit (ASIC), a field-programmable gate array (FPGA), or a complex programmable logic device (CPLD), the processor may also use a multi-core architecture.

In some embodiments, transmitting the multiple sets of antenna port configuration information and/or the CSI measurement configuration information to the terminal includes:
transmitting simultaneously, at a first moment, the multiple sets of antenna port configuration information and/or the multiple sets of CSI measurement configuration information to the terminal.

In some embodiments, transmitting the multiple sets of antenna port configuration information and/or the multiple sets of CSI measurement configuration information to the terminal includes:
transmitting respectively, at different moments, one or more sets of antenna port configuration information and/or one or more sets of CSI measurement configuration information to the terminal.

In some embodiments, transmitting the multiple sets of antenna port configuration information and/or the multiple sets of CSI measurement configuration information to the terminal includes:
transmitting indication information, to the terminal, for multiple sets of antenna ports needed to be measured and/or the multiple sets of CSI measurement configuration information, where the indication information is used to determine the multiple sets of antenna port configuration information and/or the multiple sets of CSI measurement configuration information.

In some embodiments, a configuration manner of the multiple sets of antenna port configuration information and/or the multiple sets of CSI measurement configuration information includes one or more of following manners:
one set of CSI measurement configuration information being configured with multiple sets of antenna port configuration information;
one set of CSI measurement configuration information being configured with one set of antenna port configuration information, where multiple sets of CSI measurement configuration information form a CSI measurement configuration information group, and multiple sets of antenna port configuration information in one CSI measurement configuration information group are associated; or
each beam management function being associated with one first set, where the first set includes at least one set of antenna port configuration information and/or at least one set of CSI measurement configuration information.

In some embodiments, the one set of CSI measurement configuration information being configured with the multiple sets of antenna port configuration information includes one or more of following configuration manners:
each set of CSI measurement configuration information being configured with report quality information for multiple sets of antenna ports;
each set of CSI measurement configuration information being configured with report configuration type information for multiple sets of antenna ports;
each set of CSI measurement configuration information being configured with a time domain parameter in report configuration type information for multiple sets of antenna ports;
each set of CSI measurement configuration information being configured with a frequency domain parameter in report configuration type information for multiple sets of antenna ports; or
each set of CSI measurement configuration information being configured with a codebook configuration parameter for multiple sets of antenna ports.

In some embodiments, the configuration manner, of each set of CSI measurement configuration information being configured with report quality information for multiple sets of antenna ports, includes one or more of following manners:
being configured with multiple sets of the report quality information, where each set of the report quality information corresponds to different antenna ports; or
being configured with one set of the report quality information including multiple sets of report quality parameters, where each set of report quality parameters corresponds to different antenna ports.

In some embodiments, an antenna port, corresponding to multiple sets of associated antenna port configuration information in one CSI measurement configuration information group, is a maximum antenna port configured by the network device or a set of antenna ports supporting adjustment.

In some embodiments, the multiple sets of antenna ports have a nested relationship on a same time unit; and/or
the multiple sets of antenna ports are orthogonal in at least one of a time resource, a frequency resource, or a code-domain resource.

In some embodiments, the processor is further used for reading the computer program in the memory and performing following operations:
transmitting a measurement reference signal to the terminal.

In some embodiments, obtaining the information of the multiple sets of CSI transmitted from the terminal includes:
obtaining a first message transmitted from the terminal, where the first message includes the information of the multiple sets of CSI.

In an embodiment, the network device provided by the embodiments of the present application may implement all the method steps implemented by the above-mentioned method embodiment with the network device as the execution subject, and may achieve the same effects. The same parts and beneficial effects in the embodiments as those in the method embodiments are not described in detail.

FIG. 11 is a first schematic structural diagram of an apparatus for signal transmission according to an embodiment of the present application. As shown in FIG. 11, an apparatus for signal transmission includes: a first obtaining module 1101, a first determining module 1102, a first transmitting module 1103,
where the first obtaining module 1101 is used for obtaining multiple sets of antenna port configuration information and/or multiple sets of channel state information (CSI) measurement configuration information transmitted from a network device at a first moment;
the first determining module 1102 is used for measuring multiple sets of CSI for multiple sets of antenna ports based on the multiple sets of antenna port configuration information and/or the multiple sets of CSI measurement configuration information, and determining information of multiple sets of CSI corresponding to the multiple sets of antenna ports; and
the first transmitting module 1103 is used for transmitting the information of the multiple sets of CSI to the network device.

In some embodiments, obtaining the multiple sets of antenna port configuration information and/or the multiple sets of CSI measurement configuration information transmitted from the network device at the first moment includes:
obtaining simultaneously, at the first moment, the multiple sets of antenna port configuration information and/or the multiple sets of CSI measurement configuration information transmitted from the network device.

In some embodiments, obtaining the multiple sets of antenna port configuration information and/or the multiple sets of CSI measurement configuration information transmitted from the network device at the first moment includes:
obtaining separately, at different moments, one or more sets of antenna port configuration information and/or one or more sets of CSI measurement configuration information transmitted from the network device, where all multiple sets of antenna port configuration information and/or all multiple sets of CSI measurement configuration information corresponding to a CSI measurement are obtained at the first moment.

In some embodiments, obtaining the multiple sets of antenna port configuration information and/or the multiple sets of CSI measurement configuration information transmitted from the network device includes:
obtaining indication information, transmitted from the network device, for multiple sets of antenna ports needed to be measured and/or the multiple sets of CSI measurement configuration information; and
determining the multiple sets of antenna port configuration information and/or the multiple sets of CSI measurement configuration information based on the indication information.

In some embodiments, a configuration manner of the multiple sets of antenna port configuration information and/or the multiple sets of CSI measurement configuration information includes one or more of following manners:
one set of CSI measurement configuration information being configured with multiple sets of antenna port configuration information;
one set of CSI measurement configuration information being configured with one set of antenna port configuration information, where multiple sets of CSI measurement configuration information form a CSI measurement configuration information group, and multiple sets of antenna port configuration information in one CSI measurement configuration information group are associated; or
each beam management function being associated with one first set, where the first set includes at least one set of antenna port configuration information and/or at least one set of CSI measurement configuration information.

In some embodiments, the one set of CSI measurement configuration information being configured with the multiple sets of antenna port configuration information includes one or more of following configuration manners:
each set of CSI measurement configuration information being configured with report quality information for multiple sets of antenna ports;
each set of CSI measurement configuration information being configured with report configuration type information for multiple sets of antenna ports;
each set of CSI measurement configuration information being configured with a time domain parameter in report configuration type information for multiple sets of antenna ports;
each set of CSI measurement configuration information being configured with a frequency domain parameter in report configuration type information for multiple sets of antenna ports; or
each set of CSI measurement configuration information being configured with a codebook configuration parameter for multiple sets of antenna ports.

In some embodiments, the configuration manner, of each set of CSI measurement configuration information being configured with report quality information for multiple sets of antenna ports, includes one or more of following manners:
being configured with multiple sets of the report quality information, where each set of the report quality information corresponds to different antenna ports; or
being configured with one set of the report quality information including multiple sets of report quality parameters, where each set of report quality parameters corresponds to different antenna ports.

In some embodiments, an antenna port, corresponding to multiple sets of associated antenna port configuration information in one CSI measurement configuration information group, is a maximum antenna port configured by the network device or a set of antenna ports supporting adjustment.

In some embodiments, measuring the multiple sets of CSI for the multiple sets of antenna ports based on the multiple sets of antenna port configuration information and/or the multiple sets of CSI measurement configuration information, and determining the information of the multiple sets of CSI corresponding to the multiple sets of antenna ports includes:
in case that one set of CSI measurement configuration information is configured with multiple sets of antenna port configuration information, performing one or more CSI measurements based on one set of CSI measurement configuration information in the multiple sets of CSI measurement configuration information and multiple sets of antenna port configuration information corresponding to the one set of CSI measurement configuration information, and determining the information of the multiple sets of CSI corresponding to the multiple sets of antenna ports.

In some embodiments, measuring the multiple sets of CSI for the multiple sets of antenna ports based on the multiple sets of antenna port configuration information and/or the multiple sets of CSI measurement configuration information, and determining the information of the multiple sets of CSI corresponding to the multiple sets of antenna ports includes:
in case that one set of CSI measurement configuration information is configured with one set of antenna port configuration information, performing one or more CSI measurements based on one set of CSI measurement configuration information and one set of antenna port configuration information in each CSI measurement configuration information group, and determining the information of the multiple sets of CSI corresponding to the multiple sets of antenna ports.

In some embodiments, measuring the multiple sets of CSI for the multiple sets of antenna ports based on the multiple sets of antenna port configuration information and/or the multiple sets of CSI measurement configuration information, and determining the information of the multiple sets of CSI corresponding to the multiple sets of antenna ports includes:
in case that a configuration manner of the multiple sets of antenna port configuration information and/or the multiple sets of CSI measurement configuration information is that each beam management function is associated with one first set, performing one or more CSI measurements based on an associated first set, and determining the information of the multiple sets of CSI corresponding to the multiple sets of antenna ports.

In some embodiments, the multiple sets of antenna ports have a nested relationship on a same time unit; and/or
the multiple sets of antenna ports are orthogonal in at least one of a time resource, a frequency resource, or a code-domain resource.

In some embodiments, the apparatus further includes:
a third obtaining module, used for obtaining a measurement reference signal transmitted from the network device.

In some embodiments, the information of the multiple sets of CSI is included in a first message.

In some embodiment, the above-mentioned apparatuses for signal transmission provided by the embodiments of the present application may implement all the method steps implemented by the above-mentioned method embodiment with the terminal as the execution subject, and may achieve the same effects. The same parts and beneficial effects in the embodiments as those in the method embodiments are not described in detail.

FIG. 12 is a second schematic structural diagram of an apparatus for signal transmission according to an embodiment of the present application. As shown in FIG. 11, an apparatus for signal transmission includes: a first configuring module 1201, a second transmitting module 1202, a second obtaining module 1203,
where the first configuring module 1201 is used for configuring multiple sets of antenna port configuration information and/or multiple sets of channel state information (CSI) measurement configuration information;
the second transmitting module 1202 is used for transmitting the multiple sets of antenna port configuration information and/or the multiple sets of CSI measurement configuration information to a terminal; and
the second obtaining module 1203 is used for obtaining information of multiple sets of CSI transmitted from the terminal.

In some embodiments, transmitting the multiple sets of antenna port configuration information and/or the CSI measurement configuration information to the terminal includes:
transmitting simultaneously, at a first moment, the multiple sets of antenna port configuration information and/or the multiple sets of CSI measurement configuration information to the terminal.

In some embodiments, transmitting the multiple sets of antenna port configuration information and/or the multiple sets of CSI measurement configuration information to the terminal includes:
transmitting respectively, at different moments, one or more sets of antenna port configuration information and/or one or more sets of CSI measurement configuration information to the terminal.

In some embodiments, transmitting the multiple sets of antenna port configuration information and/or the multiple sets of CSI measurement configuration information to the terminal includes:
transmitting indication information, to the terminal, for multiple sets of antenna ports needed to be measured and/or the multiple sets of CSI measurement configuration information, where the indication information is used to determine the multiple sets of antenna port configuration information and/or the multiple sets of CSI measurement configuration information.

In some embodiments, a configuration manner of the multiple sets of antenna port configuration information and/or the multiple sets of CSI measurement configuration information includes one or more of following manners:
one set of CSI measurement configuration information being configured with multiple sets of antenna port configuration information;
one set of CSI measurement configuration information being configured with one set of antenna port configuration information, where multiple sets of CSI measurement configuration information form a CSI measurement configuration information group, and multiple sets of antenna port configuration information in one CSI measurement configuration information group are associated; or
each beam management function being associated with one first set, where the first set includes at least one set of antenna port configuration information and/or at least one set of CSI measurement configuration information.

In some embodiments, the one set of CSI measurement configuration information being configured with the multiple sets of antenna port configuration information includes one or more of following configuration manners:
each set of CSI measurement configuration information being configured with report quality information for multiple sets of antenna ports;
each set of CSI measurement configuration information being configured with report configuration type information for multiple sets of antenna ports;
each set of CSI measurement configuration information being configured with a time domain parameter in report configuration type information for multiple sets of antenna ports;
each set of CSI measurement configuration information being configured with a frequency domain parameter in report configuration type information for multiple sets of antenna ports; or
each set of CSI measurement configuration information being configured with a codebook configuration parameter for multiple sets of antenna ports.

In some embodiments, the configuration manner, of each set of CSI measurement configuration information being configured with report quality information for multiple sets of antenna ports, includes one or more of following manners:
being configured with multiple sets of the report quality information, where each set of the report quality information corresponds to different antenna ports; or
being configured with one set of the report quality information including multiple sets of report quality parameters, where each set of report quality parameters corresponds to different antenna ports.

In some embodiments, an antenna port, corresponding to multiple sets of associated antenna port configuration information in one CSI measurement configuration information group, is a maximum antenna port configured by the network device or a set of antenna ports supporting adjustment.

In some embodiments, the multiple sets of antenna ports have a nested relationship on a same time unit; and/or
the multiple sets of antenna ports are orthogonal in at least one of a time resource, a frequency resource, or a code-domain resource.

In some embodiments, the apparatus further includes:
a third transmitting module, used for transmitting a measurement reference signal to the terminal.

In some embodiments, obtaining the information of the multiple sets of CSI transmitted from the terminal includes:
obtaining a first message transmitted from the terminal, where the first message includes the information of the multiple sets of CSI.

In an embodiment, the above-mentioned apparatuses for signal transmission provided by the embodiments of the present application may implement all the method steps implemented by the above-mentioned method embodiment with the network device as the execution subject, and may achieve the same effects. The same parts and beneficial effects in the embodiments as those in the method embodiments are not described in detail.

It should be noted that, the division of units/ module in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as an independent product, it may be stored in a processor readable storage medium. Based on such understanding, the solutions of the present application in essence or a part of the solutions that contributes to the related art, or all or part of the solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store program codes, such as a flash drive, a mobile hard disk, a read-only memory (ROM), a random access memory (RAM), a magnetic disk, or a compact disk.

An embodiment of the present application provides a computer-readable storage medium, which stores a computer program, and the computer program is used for causing a computer to perform any of the energy-saving control methods provided by the above embodiments.

In an embodiment, the above-mentioned computer-readable storage medium provided by the embodiments of the present application may implement all the steps of methods implemented by the above-mentioned method, and may achieve the same effects. The same parts and beneficial effects in the embodiments as those in the method embodiments are not described in detail.

It should be noted that, the computer-readable storage medium may be any available medium or data storage device that may be accessed by a processor, including but not limited to magnetic storage (such as floppy disks, hard disks, magnetic tapes, magneto-optical disks (MO)), optical storage (such as CDs, DVDs, BDs, HVDs, etc.), and semiconductor storage (such as ROM, EPROM, EEPROM, non-volatile memory (NAND FLASH), solid-state drives (SSDs)), etc.

It should be further noted that: in the embodiments of the present application, the terms "first", "second", etc. are used to distinguish similar objects, rather than to describe a specific order or sequence. It should be understood that the terms used in this way may be interchanged under appropriate circumstances, and the embodiments of the present application may be implemented in an order other than those illustrated or described herein. The objects distinguished by "first" and "second" are usually of the same category, and do not limit the number of objects. For example, the first object may be one or multiple.

In the embodiments of the present application, the term "and/or" describes a related relationship of associated objects, and indicates that there may be three kinds of relationships. For example, A and/or B may represent that A exists alone, A and B exist simultaneously, and B exists alone. Character "/" generally indicates that the associated objects have an "or" relationship.

In the embodiments of the present application, the term "multiple" refers to two or more than two, and other quantifiers are similar to it.

"Determining B based on A" in the present application means that the factor A should be considered when determining B. It is not limited to "determining B only based on A", but also includes "determining B based on A and C", "determining B based on A, C and E", "determining C based on A, and further determining B based on C", etc. In addition, it may also include taking A as a condition for determining B, for example, "in case that A meets a first condition, determining B by using a first method". For another example, "in case that A meets a second condition, determining B", etc. For another example, "in case that A meets a third condition, determining B based on a first parameter", etc. In an embodiment, it may be that A is taken as a condition for determining a factor of B, for example, "in case that A meets the first condition, determining C by using the first method, and further determining B based on C", etc.

The solutions according to the embodiments of the present application may be applicable to various systems, especially 5G system. For example, the applicable systems may be a global system of mobile communication (GSM) system, a code division multiple access (CDMA) system, a wideband code division multiple access (WCDMA) general packet radio service (GPRS) system, a long term evolution (LTE) system, an LTE frequency division duplex (FDD) system, an LTE time division duplex (TDD) system, a long term evolution advanced (LTE-A) system, a universal mobile telecommunication system (UMTS), a worldwide interoperability for microwave access (WiMAX) system, a 5G new radio (NR) system, etc. These various systems include a terminal device and a network device, and may further include a core network part, such as an evolved packet system (EPS), a 5G system (5GS), and the like.

The terminal device in the embodiments of the present application may be a device that provides voice and/or data connectivity to a user, a handheld device with a wireless connection function, or other processing devices connected to a wireless modem. In different systems, the names of the terminal device may be different. For example, in the 5G system, the terminal device may be called as a user equipment (UE). A wireless terminal device may communicate with one or more core networks (CNs) via a radio access network (RAN), and the wireless terminal device may be a mobile terminal device, such as a mobile phone (or cellular phone), or a computer with a mobile terminal device, e.g., a portable mobile device, a pocket-sized mobile device, a handheld mobile device, a computer-built mobile device or a vehicle-mounted mobile device, which exchanges language and/or data with the radio access network. For example, a personal communication service (PCS) phone, a radio phone, a session initiated protocol (SIP) phone, a wireless local loop (WLL) station, a personal digital assistant (PDA) and other devices. The wireless terminal device may also be called a system, a subscriber unit, a subscriber station, a mobile station, a mobile, a remote station, an access point, a remote terminal, an access terminal, a user terminal, a user agent, or a user device, which is not limited in the embodiments of the present application.

The network device in the embodiments of the present application may be a base station, and the base station may include multiple cells providing services for the terminal. Depending on the specific scenario, the base station may be called an access point, or a device communicating with the wireless terminal device through one or more sectors on the air interface in the access network, or other names. The network device may be used for exchanging the received air frames with Internet Protocol (IP) packets, and acting as a router between the wireless terminal device and the rest of the access network, where the rest of the access network may include an IP communication network. The network device may also coordinate attribute management for the air interface. For example, the network device in the embodiments of the present application may be a base transceiver station (BTS) in a global system for mobile communications (GSM) or a code division multiple access (CDMA), a node B in a wideband code division multiple access (WCDMA), an evolutional node B (eNB or e-Node B) in a long term evolution (LTE) system, a 5G base station (gNB) in 5G network architecture (next generation system), a home evolved node B (HeNB), a relay node, a femto, or a pico base station (pico), etc., which is not limited in the embodiments of the present application. In some network structures, the network device may include a centralized unit (CU) node and a distributed unit (DU) node, and the centralized unit and the distributed unit may be arranged to be geographically separated.

A multi-input multi-output (MIMO) transmission may be performed between the network device and the terminal device by using one or more antennas. The MIMO transmission may be single-user MIMO (SU-MIMO) or multi-user MIMO (MU-MIMO). Depending on the form and number of antenna combinations, MIMO transmission may be 2D-MIMO, 3D-MIMO, FD-MIMO or massive-MIMO, and may also be diversity transmission, pre-coding transmission, beamforming transmission, etc.

As will be appreciated by those skilled in the art, embodiments of the present application may be provided as methods, systems, or computer program products. The present application may take the form of an entirely hardware embodiment, an entirely software embodiment, or an embodiment combining software and hardware. Moreover, the present application may take the form of a computer program product implemented on one or more computer-usable storage media (including but not limited to disk storage and optical storage, etc.) having computer-usable program code.

The present application is described with reference to flow charts and/or block diagrams of methods, apparatus (systems), and computer program products according to embodiments of the present application. It will be understood that each flow and/or block in the flow charts and/or block diagrams, and combinations thereof may be implemented by computer-executable instructions. These computer-executable instructions may be provided to processors of a general purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor readable memory capable of directing a computer or other programmable data processing apparatus to operate in a particular manner, and the instructions stored in the processor readable memory may result in a manufacture including instruction means, the instruction means may perform the functions specified in one or more flows of the flowchart and/or one or more blocks of the block diagram.

These processor-executable instructions may also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

It will be apparent to those skilled in the art that various modifications and variations may be made in the present application without departing from the scope of the present application. Thus, provided that these modifications and variations of the present application fall within the scope of the claims of the present application and their equivalents, the present application is also intended to cover such modifications and variations.

## Claims

1. A method for signal transmission, performed by a terminal, comprising:
obtaining multiple sets of antenna port configuration information and/or multiple sets of channel state information (CSI) measurement configuration information transmitted from a network device at a first moment;
measuring multiple sets of CSI for multiple sets of antenna ports based on the multiple sets of antenna port configuration information and/or the multiple sets of CSI measurement configuration information, and determining information of multiple sets of CSI corresponding to the multiple sets of antenna ports; and
transmitting the information of the multiple sets of CSI to the network device.

2. The method of claim 1, wherein obtaining the multiple sets of antenna port configuration information and/or the multiple sets of CSI measurement configuration information transmitted from the network device at the first moment comprises:
obtaining simultaneously, at the first moment, the multiple sets of antenna port configuration information and/or the multiple sets of CSI measurement configuration information transmitted from the network device.

3. The method of claim 1, wherein obtaining the multiple sets of antenna port configuration information and/or the multiple sets of CSI measurement configuration information transmitted from the network device at the first moment comprises:
obtaining separately, at different moments, one or more sets of antenna port configuration information and/or one or more sets of CSI measurement configuration information transmitted from the network device, wherein all multiple sets of antenna port configuration information and/or all multiple sets of CSI measurement configuration information corresponding to a CSI measurement are obtained at the first moment.

4. The method of claim 1, wherein obtaining the multiple sets of antenna port configuration information and/or the multiple sets of CSI measurement configuration information transmitted from the network device comprises:
obtaining indication information, transmitted from the network device, for multiple sets of antenna ports needed to be measured and/or the multiple sets of CSI measurement configuration information; and
determining the multiple sets of antenna port configuration information and/or the multiple sets of CSI measurement configuration information based on the indication information.

5. The method of claim 1, wherein a configuration manner of the multiple sets of antenna port configuration information and/or the multiple sets of CSI measurement configuration information comprises one or more of following manners:
one set of CSI measurement configuration information being configured with multiple sets of antenna port configuration information;
one set of CSI measurement configuration information being configured with one set of antenna port configuration information, wherein multiple sets of CSI measurement configuration information form a CSI measurement configuration information group, and multiple sets of antenna port configuration information in one CSI measurement configuration information group are associated; or
each beam management function being associated with one first set, wherein the first set comprises at least one set of antenna port configuration information and/or at least one set of CSI measurement configuration information.

6. The method of claim 5, wherein the one set of CSI measurement configuration information being configured with the multiple sets of antenna port configuration information comprises one or more of following configuration manners:
each set of CSI measurement configuration information being configured with report quality information for multiple sets of antenna ports;
each set of CSI measurement configuration information being configured with report configuration type information for multiple sets of antenna ports;
each set of CSI measurement configuration information being configured with a time domain parameter in report configuration type information for multiple sets of antenna ports;
each set of CSI measurement configuration information being configured with a frequency domain parameter in report configuration type information for multiple sets of antenna ports; or
each set of CSI measurement configuration information being configured with a codebook configuration parameter for multiple sets of antenna ports.

7. The method of claim 6, wherein the configuration manner, of each set of CSI measurement configuration information being configured with report quality information for multiple sets of antenna ports, comprises one or more of following manners:
being configured with multiple sets of the report quality information, wherein each set of the report quality information corresponds to different antenna ports; or
being configured with one set of the report quality information comprising multiple sets of report quality parameters, wherein each set of report quality parameters corresponds to different antenna ports.

8. The method of claim 5, wherein an antenna port, corresponding to multiple sets of associated antenna port configuration information in one CSI measurement configuration information group, is a maximum antenna port configured by the network device or a set of antenna ports supporting adjustment.

9. The method of claim 5, wherein measuring the multiple sets of CSI for the multiple sets of antenna ports based on the multiple sets of antenna port configuration information and/or the multiple sets of CSI measurement configuration information, and determining the information of the multiple sets of CSI corresponding to the multiple sets of antenna ports comprises:
in case that one set of CSI measurement configuration information is configured with multiple sets of antenna port configuration information, performing one or more CSI measurements based on one set of CSI measurement configuration information in the multiple sets of CSI measurement configuration information and multiple sets of antenna port configuration information corresponding to the one set of CSI measurement configuration information, and determining the information of the multiple sets of CSI corresponding to the multiple sets of antenna ports.

10. The method of claim 5, wherein measuring the multiple sets of CSI for the multiple sets of antenna ports based on the multiple sets of antenna port configuration information and/or the multiple sets of CSI measurement configuration information, and determining the information of the multiple sets of CSI corresponding to the multiple sets of antenna ports comprises:
in case that one set of CSI measurement configuration information is configured with one set of antenna port configuration information, performing one or more CSI measurements based on one set of CSI measurement configuration information and one set of antenna port configuration information in each CSI measurement configuration information group, and determining the information of the multiple sets of CSI corresponding to the multiple sets of antenna ports.

11. The method of claim 5, wherein measuring the multiple sets of CSI for the multiple sets of antenna ports based on the multiple sets of antenna port configuration information and/or the multiple sets of CSI measurement configuration information, and determining the information of the multiple sets of CSI corresponding to the multiple sets of antenna ports comprises:
in case that a configuration manner of the multiple sets of antenna port configuration information and/or the multiple sets of CSI measurement configuration information is that each beam management function is associated with one first set, performing one or more CSI measurements based on an associated first set, and determining the information of the multiple sets of CSI corresponding to the multiple sets of antenna ports.

12. The method of claim 1, wherein the multiple sets of antenna ports have a nested relationship on a same time unit; and/or
the multiple sets of antenna ports are orthogonal in at least one of a time resource, a frequency resource, or a code-domain resource.

13. The method of claim 1, further comprising:
obtaining a measurement reference signal transmitted from the network device.

14. The method of claim 1, wherein the information of the multiple sets of CSI is comprised in a first message.

15. A method for signal transmission, performed by a network device, comprising:
configuring multiple sets of antenna port configuration information and/or multiple sets of channel state information (CSI) measurement configuration information;
transmitting the multiple sets of antenna port configuration information and/or the multiple sets of CSI measurement configuration information to a terminal; and
obtaining information of multiple sets of CSI transmitted from the terminal.

16. The method of claim 15, wherein transmitting the multiple sets of antenna port configuration information and/or the CSI measurement configuration information to the terminal comprises:
transmitting simultaneously, at a first moment, the multiple sets of antenna port configuration information and/or the multiple sets of CSI measurement configuration information to the terminal.

17. The method of claim 15, wherein transmitting the multiple sets of antenna port configuration information and/or the multiple sets of CSI measurement configuration information to the terminal comprises:
transmitting respectively, at different moments, one or more sets of antenna port configuration information and/or one or more sets of CSI measurement configuration information to the terminal.

18. The method of claim 15, wherein transmitting the multiple sets of antenna port configuration information and/or the multiple sets of CSI measurement configuration information to the terminal comprises:
transmitting indication information, to the terminal, for multiple sets of antenna ports needed to be measured and/or the multiple sets of CSI measurement configuration information, wherein the indication information is used to determine the multiple sets of antenna port configuration information and/or the multiple sets of CSI measurement configuration information.

19. The method of claim 15, wherein a configuration manner of the multiple sets of antenna port configuration information and/or the multiple sets of CSI measurement configuration information comprises one or more of following manners:
one set of CSI measurement configuration information being configured with multiple sets of antenna port configuration information;
one set of CSI measurement configuration information being configured with one set of antenna port configuration information, wherein multiple sets of CSI measurement configuration information form a CSI measurement configuration information group, and multiple sets of antenna port configuration information in one CSI measurement configuration information group are associated; or
each beam management function being associated with one first set, wherein the first set comprises at least one set of antenna port configuration information and/or at least one set of CSI measurement configuration information.

20. The method of claim 19, wherein the one set of CSI measurement configuration information being configured with the multiple sets of antenna port configuration information comprises one or more of following configuration manners:
each set of CSI measurement configuration information being configured with report quality information for multiple sets of antenna ports;
each set of CSI measurement configuration information being configured with report configuration type information for multiple sets of antenna ports;
each set of CSI measurement configuration information being configured with a time domain parameter in report configuration type information for multiple sets of antenna ports;
each set of CSI measurement configuration information being configured with a frequency domain parameter in report configuration type information for multiple sets of antenna ports; or
each set of CSI measurement configuration information being configured with a codebook configuration parameter for multiple sets of antenna ports.

21. The method of claim 20, wherein the configuration manner, of each set of CSI measurement configuration information being configured with report quality information for multiple sets of antenna ports, comprises one or more of following manners:
being configured with multiple sets of the report quality information, wherein each set of the report quality information corresponds to different antenna ports; or
being configured with one set of the report quality information comprising multiple sets of report quality parameters, wherein each set of report quality parameters corresponds to different antenna ports.

22. The method of claim 19, wherein an antenna port, corresponding to multiple sets of associated antenna port configuration information in one CSI measurement configuration information group, is a maximum antenna port configured by the network device or a set of antenna ports supporting adjustment.

23. The method of claim 15, wherein the multiple sets of antenna ports have a nested relationship on a same time unit; and/or
the multiple sets of antenna ports are orthogonal in at least one of a time resource, a frequency resource, or a code-domain resource.

24. The method of claim 15, further comprising:
transmitting a measurement reference signal to the terminal.

25. The method of claim 15, wherein obtaining the information of the multiple sets of CSI transmitted from the terminal comprises:
obtaining a first message transmitted from the terminal, wherein the first message comprises the information of the multiple sets of CSI.

26. A terminal, comprising: a memory, a transceiver, and a processor;
wherein the memory is used for storing a computer program; the transceiver is used for receiving and transmitting data under control of the processor; and the processor is used for reading the computer program in the memory and performing following operations:
obtaining multiple sets of antenna port configuration information and/or multiple sets of channel state information (CSI) measurement configuration information transmitted from a network device at a first moment;
measuring multiple sets of CSI for multiple sets of antenna ports based on the multiple sets of antenna port configuration information and/or the multiple sets of CSI measurement configuration information, and determining information of multiple sets of CSI corresponding to the multiple sets of antenna ports; and
transmitting the information of the multiple sets of CSI to the network device.

27. The terminal of claim 26, wherein obtaining the multiple sets of antenna port configuration information and/or the multiple sets of CSI measurement configuration information transmitted from the network device at the first moment comprises:
obtaining simultaneously, at the first moment, the multiple sets of antenna port configuration information and/or the multiple sets of CSI measurement configuration information transmitted from the network device.

28. The terminal of claim 26, wherein obtaining the multiple sets of antenna port configuration information and/or the multiple sets of CSI measurement configuration information transmitted from the network device at the first moment comprises:
obtaining separately, at different moments, one or more sets of antenna port configuration information and/or one or more sets of CSI measurement configuration information transmitted from the network device, wherein all multiple sets of antenna port configuration information and/or all multiple sets of CSI measurement configuration information corresponding to a CSI measurement are obtained at the first moment.

29. The terminal of claim 26, wherein obtaining the multiple sets of antenna port configuration information and/or the multiple sets of CSI measurement configuration information transmitted from the network device comprises:
obtaining indication information, transmitted from the network device, for multiple sets of antenna ports needed to be measured and/or the multiple sets of CSI measurement configuration information; and
determining the multiple sets of antenna port configuration information and/or the multiple sets of CSI measurement configuration information based on the indication information.

30. The terminal of claim 26, wherein a configuration manner of the multiple sets of antenna port configuration information and/or the multiple sets of CSI measurement configuration information comprises one or more of following manners:
one set of CSI measurement configuration information being configured with multiple sets of antenna port configuration information;
one set of CSI measurement configuration information being configured with one set of antenna port configuration information, wherein multiple sets of CSI measurement configuration information form a CSI measurement configuration information group, and multiple sets of antenna port configuration information in one CSI measurement configuration information group are associated; or
each beam management function being associated with one first set, wherein the first set comprises at least one set of antenna port configuration information and/or at least one set of CSI measurement configuration information.

31. The terminal of claim 30, wherein the one set of CSI measurement configuration information being configured with the multiple sets of antenna port configuration information comprises one or more of following configuration manners:
each set of CSI measurement configuration information being configured with report quality information for multiple sets of antenna ports;
each set of CSI measurement configuration information being configured with report configuration type information for multiple sets of antenna ports;
each set of CSI measurement configuration information being configured with a time domain parameter in report configuration type information for multiple sets of antenna ports;
each set of CSI measurement configuration information being configured with a frequency domain parameter in report configuration type information for multiple sets of antenna ports; or
each set of CSI measurement configuration information being configured with a codebook configuration parameter for multiple sets of antenna ports.

32. The terminal of claim 31, wherein the configuration manner, of each set of CSI measurement configuration information being configured with report quality information for multiple sets of antenna ports, comprises one or more of following manners:
being configured with multiple sets of the report quality information, wherein each set of the report quality information corresponds to different antenna ports; or
being configured with one set of the report quality information comprising multiple sets of report quality parameters, wherein each set of report quality parameters corresponds to different antenna ports.

33. The terminal of claim 30, wherein an antenna port, corresponding to multiple sets of associated antenna port configuration information in one CSI measurement configuration information group, is a maximum antenna port configured by the network device or a set of antenna ports supporting adjustment.

34. The terminal of claim 30, wherein measuring the multiple sets of CSI for the multiple sets of antenna ports based on the multiple sets of antenna port configuration information and/or the multiple sets of CSI measurement configuration information, and determining the information of the multiple sets of CSI corresponding to the multiple sets of antenna ports comprises:
in case that one set of CSI measurement configuration information is configured with multiple sets of antenna port configuration information, performing one or more CSI measurements based on one set of CSI measurement configuration information in the multiple sets of CSI measurement configuration information and multiple sets of antenna port configuration information corresponding to the one set of CSI measurement configuration information, and determining the information of the multiple sets of CSI corresponding to the multiple sets of antenna ports.

35. The terminal of claim 30, wherein measuring the multiple sets of CSI for the multiple sets of antenna ports based on the multiple sets of antenna port configuration information and/or the multiple sets of CSI measurement configuration information, and determining the information of the multiple sets of CSI corresponding to the multiple sets of antenna ports comprises:
in case that one set of CSI measurement configuration information is configured with one set of antenna port configuration information, performing one or more CSI measurements based on one set of CSI measurement configuration information and one set of antenna port configuration information in each CSI measurement configuration information group, and determining the information of the multiple sets of CSI corresponding to the multiple sets of antenna ports.

36. The terminal of claim 30, wherein measuring the multiple sets of CSI for the multiple sets of antenna ports based on the multiple sets of antenna port configuration information and/or the multiple sets of CSI measurement configuration information, and determining the information of the multiple sets of CSI corresponding to the multiple sets of antenna ports comprises:
in case that a configuration manner of the multiple sets of antenna port configuration information and/or the multiple sets of CSI measurement configuration information is that each beam management function is associated with one first set, performing one or more CSI measurements based on an associated first set, and determining the information of the multiple sets of CSI corresponding to the multiple sets of antenna ports.

37. The terminal of claim 26, wherein the multiple sets of antenna ports have a nested relationship on a same time unit; and/or
the multiple sets of antenna ports are orthogonal in at least one of a time resource, a frequency resource, or a code-domain resource.

38. The terminal of claim 26, further comprising:
obtaining a measurement reference signal transmitted from the network device.

39. The terminal of claim 26, wherein the information of the multiple sets of CSI is comprised in a first message.

40. A network side device, comprising: a memory, a transceiver, and a processor;
wherein the memory is used for storing a computer program; the transceiver is used for receiving and transmitting data under control of the processor; and the processor is used for reading the computer program in the memory and performing the following operations:
configuring multiple sets of antenna port configuration information and/or multiple sets of channel state information (CSI) measurement configuration information;
transmitting the multiple sets of antenna port configuration information and/or the multiple sets of CSI measurement configuration information to a terminal; and
obtaining information of multiple sets of CSI transmitted from the terminal.

41. The network side device of claim 40, wherein transmitting the multiple sets of antenna port configuration information and/or the CSI measurement configuration information to the terminal comprises:
transmitting simultaneously, at a first moment, the multiple sets of antenna port configuration information and/or the multiple sets of CSI measurement configuration information to the terminal.

42. The network side device of claim 40, wherein transmitting the multiple sets of antenna port configuration information and/or the multiple sets of CSI measurement configuration information to the terminal comprises:
transmitting respectively, at different moments, one or more sets of antenna port configuration information and/or one or more sets of CSI measurement configuration information to the terminal.

43. The network side device of claim 40, wherein transmitting the multiple sets of antenna port configuration information and/or the multiple sets of CSI measurement configuration information to the terminal comprises:
transmitting indication information, to the terminal, for multiple sets of antenna ports needed to be measured and/or the multiple sets of CSI measurement configuration information, wherein the indication information is used to determine the multiple sets of antenna port configuration information and/or the multiple sets of CSI measurement configuration information.

44. The network side device of claim 40, wherein a configuration manner of the multiple sets of antenna port configuration information and/or the multiple sets of CSI measurement configuration information comprises one or more of following manners:
one set of CSI measurement configuration information being configured with multiple sets of antenna port configuration information;
one set of CSI measurement configuration information being configured with one set of antenna port configuration information, wherein multiple sets of CSI measurement configuration information form a CSI measurement configuration information group, and multiple sets of antenna port configuration information in one CSI measurement configuration information group are associated; or
each beam management function being associated with one first set, wherein the first set comprises at least one set of antenna port configuration information and/or at least one set of CSI measurement configuration information.

45. The network side device of claim 44, wherein the one set of CSI measurement configuration information being configured with the multiple sets of antenna port configuration information comprises one or more of following configuration manners:
each set of CSI measurement configuration information being configured with report quality information for multiple sets of antenna ports;
each set of CSI measurement configuration information being configured with report configuration type information for multiple sets of antenna ports;
each set of CSI measurement configuration information being configured with a time domain parameter in report configuration type information for multiple sets of antenna ports;
each set of CSI measurement configuration information being configured with a frequency domain parameter in report configuration type information for multiple sets of antenna ports; or
each set of CSI measurement configuration information being configured with a codebook configuration parameter for multiple sets of antenna ports.

46. The network side device of claim 45, wherein the configuration manner, of each set of CSI measurement configuration information being configured with report quality information for multiple sets of antenna ports, comprises one or more of following manners:
being configured with multiple sets of the report quality information, wherein each set of the report quality information corresponds to different antenna ports; or
being configured with one set of the report quality information comprising multiple sets of report quality parameters, wherein each set of report quality parameters corresponds to different antenna ports.

47. The network side device of claim 44, wherein an antenna port, corresponding to multiple sets of associated antenna port configuration information in one CSI measurement configuration information group, is a maximum antenna port configured by the network device or a set of antenna ports supporting adjustment.

48. The network side device of claim 40, wherein the multiple sets of antenna ports have a nested relationship on a same time unit; and/or
the multiple sets of antenna ports are orthogonal in at least one of a time resource, a frequency resource, or a code-domain resource.

49. The network side device of claim 40, further comprising:
transmitting a measurement reference signal to the terminal.

50. The network side device of claim 40, wherein obtaining the information of the multiple sets of CSI transmitted from the terminal comprises:
obtaining a first message transmitted from the terminal, wherein the first message comprises the information of the multiple sets of CSI.

51. An apparatus for signal transmission, comprising:
a first obtaining module, used for obtaining multiple sets of antenna port configuration information and/or multiple sets of channel state information (CSI) measurement configuration information transmitted from a network device at a first moment;
a first determining module, used for measuring multiple sets of CSI for multiple sets of antenna ports based on the multiple sets of antenna port configuration information and/or the multiple sets of CSI measurement configuration information, and determining information of multiple sets of CSI corresponding to the multiple sets of antenna ports; and
a first transmitting module, used for transmitting the information of the multiple sets of CSI to the network device.

52. The apparatus of claim 51, wherein obtaining the multiple sets of antenna port configuration information and/or the multiple sets of CSI measurement configuration information transmitted from the network device at the first moment comprises:
obtaining simultaneously, at the first moment, the multiple sets of antenna port configuration information and/or the multiple sets of CSI measurement configuration information transmitted from the network device.

53. The apparatus of claim 51, wherein obtaining the multiple sets of antenna port configuration information and/or the multiple sets of CSI measurement configuration information transmitted from the network device at the first moment comprises:
obtaining separately, at different moments, one or more sets of antenna port configuration information and/or one or more sets of CSI measurement configuration information transmitted from the network device, wherein all multiple sets of antenna port configuration information and/or all multiple sets of CSI measurement configuration information corresponding to a CSI measurement are obtained at the first moment.

54. The apparatus of claim 51, wherein obtaining the multiple sets of antenna port configuration information and/or the multiple sets of CSI measurement configuration information transmitted from the network device comprises:
obtaining indication information, transmitted from the network device, for multiple sets of antenna ports needed to be measured and/or the multiple sets of CSI measurement configuration information; and
determining the multiple sets of antenna port configuration information and/or the multiple sets of CSI measurement configuration information based on the indication information.

55. The apparatus of claim 51, wherein a configuration manner of the multiple sets of antenna port configuration information and/or the multiple sets of CSI measurement configuration information comprises one or more of following manners:
one set of CSI measurement configuration information being configured with multiple sets of antenna port configuration information;
one set of CSI measurement configuration information being configured with one set of antenna port configuration information, wherein multiple sets of CSI measurement configuration information form a CSI measurement configuration information group, and multiple sets of antenna port configuration information in one CSI measurement configuration information group are associated; or
each beam management function being associated with one first set, wherein the first set comprises at least one set of antenna port configuration information and/or at least one set of CSI measurement configuration information.

56. The apparatus of claim 55, wherein the one set of CSI measurement configuration information being configured with the multiple sets of antenna port configuration information comprises one or more of following configuration manners:
each set of CSI measurement configuration information being configured with report quality information for multiple sets of antenna ports;
each set of CSI measurement configuration information being configured with report configuration type information for multiple sets of antenna ports;
each set of CSI measurement configuration information being configured with a time domain parameter in report configuration type information for multiple sets of antenna ports;
each set of CSI measurement configuration information being configured with a frequency domain parameter in report configuration type information for multiple sets of antenna ports; or
each set of CSI measurement configuration information being configured with a codebook configuration parameter for multiple sets of antenna ports.

57. The apparatus of claim 56, wherein the configuration manner, of each set of CSI measurement configuration information being configured with report quality information for multiple sets of antenna ports, comprises one or more of following manners:
being configured with multiple sets of the report quality information, wherein each set of the report quality information corresponds to different antenna ports; or
being configured with one set of the report quality information comprising multiple sets of report quality parameters, wherein each set of report quality parameters corresponds to different antenna ports.

58. The apparatus of claim 55, wherein an antenna port, corresponding to multiple sets of associated antenna port configuration information in one CSI measurement configuration information group, is a maximum antenna port configured by the network device or a set of antenna ports supporting adjustment.

59. The apparatus of claim 55, wherein measuring the multiple sets of CSI for the multiple sets of antenna ports based on the multiple sets of antenna port configuration information and/or the multiple sets of CSI measurement configuration information, and determining the information of the multiple sets of CSI corresponding to the multiple sets of antenna ports comprises:
in case that one set of CSI measurement configuration information is configured with multiple sets of antenna port configuration information, performing one or more CSI measurements based on one set of CSI measurement configuration information in the multiple sets of CSI measurement configuration information and multiple sets of antenna port configuration information corresponding to the one set of CSI measurement configuration information, and determining the information of the multiple sets of CSI corresponding to the multiple sets of antenna ports.

60. The apparatus of claim 55, wherein measuring the multiple sets of CSI for the multiple sets of antenna ports based on the multiple sets of antenna port configuration information and/or the multiple sets of CSI measurement configuration information, and determining the information of the multiple sets of CSI corresponding to the multiple sets of antenna ports comprises:
in case that one set of CSI measurement configuration information is configured with one set of antenna port configuration information, performing one or more CSI measurements based on one set of CSI measurement configuration information and one set of antenna port configuration information in each CSI measurement configuration information group, and determining the information of the multiple sets of CSI corresponding to the multiple sets of antenna ports.

61. The apparatus of claim 55, wherein measuring the multiple sets of CSI for the multiple sets of antenna ports based on the multiple sets of antenna port configuration information and/or the multiple sets of CSI measurement configuration information, and determining the information of the multiple sets of CSI corresponding to the multiple sets of antenna ports comprises:
in case that a configuration manner of the multiple sets of antenna port configuration information and/or the multiple sets of CSI measurement configuration information is that each beam management function is associated with one first set, performing one or more CSI measurements based on an associated first set, and determining the information of the multiple sets of CSI corresponding to the multiple sets of antenna ports.

62. The apparatus of claim 51, wherein the multiple sets of antenna ports have a nested relationship on a same time unit; and/or
the multiple sets of antenna ports are orthogonal in at least one of a time resource, a frequency resource, or a code-domain resource.

63. The apparatus of claim 51, further comprising:
a third obtaining module, used for obtaining a measurement reference signal transmitted from the network device.

64. The apparatus of claim 51, wherein the information of the multiple sets of CSI is comprised in a first message.

65. An apparatus for signal transmission, comprising:
a first configuring module, used for configuring multiple sets of antenna port configuration information and/or multiple sets of channel state information (CSI) measurement configuration information;
a second transmitting module, used for transmitting the multiple sets of antenna port configuration information and/or the multiple sets of CSI measurement configuration information to a terminal; and
a second obtaining module, used for obtaining information of multiple sets of CSI transmitted from the terminal.

66. The apparatus of claim 65, wherein transmitting the multiple sets of antenna port configuration information and/or the CSI measurement configuration information to the terminal comprises:
transmitting simultaneously, at a first moment, the multiple sets of antenna port configuration information and/or the multiple sets of CSI measurement configuration information to the terminal.

67. The apparatus of claim 65, wherein transmitting the multiple sets of antenna port configuration information and/or the multiple sets of CSI measurement configuration information to the terminal comprises:
transmitting respectively, at different moments, one or more sets of antenna port configuration information and/or one or more sets of CSI measurement configuration information to the terminal.

68. The apparatus of claim 65, wherein transmitting the multiple sets of antenna port configuration information and/or the multiple sets of CSI measurement configuration information to the terminal comprises:
transmitting indication information, to the terminal, for multiple sets of antenna ports needed to be measured and/or the multiple sets of CSI measurement configuration information, wherein the indication information is used to determine the multiple sets of antenna port configuration information and/or the multiple sets of CSI measurement configuration information.

69. The apparatus of claim 65, wherein a configuration manner of the multiple sets of antenna port configuration information and/or the multiple sets of CSI measurement configuration information comprises one or more of following manners:
one set of CSI measurement configuration information being configured with multiple sets of antenna port configuration information;
one set of CSI measurement configuration information being configured with one set of antenna port configuration information, wherein multiple sets of CSI measurement configuration information form a CSI measurement configuration information group, and multiple sets of antenna port configuration information in one CSI measurement configuration information group are associated; or
each beam management function being associated with one first set, wherein the first set comprises at least one set of antenna port configuration information and/or at least one set of CSI measurement configuration information.

70. The apparatus of claim 69, wherein the one set of CSI measurement configuration information being configured with the multiple sets of antenna port configuration information comprises one or more of following configuration manners:
each set of CSI measurement configuration information being configured with report quality information for multiple sets of antenna ports;
each set of CSI measurement configuration information being configured with report configuration type information for multiple sets of antenna ports;
each set of CSI measurement configuration information being configured with a time domain parameter in report configuration type information for multiple sets of antenna ports;
each set of CSI measurement configuration information being configured with a frequency domain parameter in report configuration type information for multiple sets of antenna ports; or
each set of CSI measurement configuration information being configured with a codebook configuration parameter for multiple sets of antenna ports.

71. The apparatus of claim 70, wherein the configuration manner, of each set of CSI measurement configuration information being configured with report quality information for multiple sets of antenna ports, comprises one or more of following manners:
being configured with multiple sets of the report quality information, wherein each set of the report quality information corresponds to different antenna ports; or
being configured with one set of the report quality information comprising multiple sets of report quality parameters, wherein each set of report quality parameters corresponds to different antenna ports.

72. The apparatus of claim 69, wherein an antenna port, corresponding to multiple sets of associated antenna port configuration information in one CSI measurement configuration information group, is a maximum antenna port configured by a network device or a set of antenna ports supporting adjustment.

73. The apparatus of claim 65, wherein the multiple sets of antenna ports have a nested relationship on a same time unit; and/or
the multiple sets of antenna ports are orthogonal in at least one of a time resource, a frequency resource, or a code-domain resource.

74. The apparatus of claim 65, further comprising:
a third transmitting module, used for transmitting a measurement reference signal to the terminal.

75. The apparatus of claim 65, wherein obtaining the information of the multiple sets of CSI transmitted from the terminal comprises:
obtaining a first message transmitted from the terminal, wherein the first message comprises the information of the multiple sets of CSI.

76. A computer-readable storage medium, storing a computer program, wherein the computer program is used for causing a processor to perform the method for signal transmission of any of claims 1 to 14, or to perform the method for signal transmission of any of claims 15 to 25.
